(19) **Europäisches Patentamt**
**European Patent Office**
**Office européen des brevets**

(11) **EP 2 067 022 B1**

(12) **FASCICULE DE BREVET EUROPEEN**

(45) Date de publication et mention
de la délivrance du brevet:
**06.03.2013 Bulletin 2013/10**

(21) Numéro de dépôt: **07848240.3**

(22) Date de dépôt: **14.09.2007**

(51) Int Cl.:
*G01N 21/71* (2006.01)     *G01N 21/64* (2006.01)

(86) Numéro de dépôt international:
**PCT/FR2007/001501**

(87) Numéro de publication internationale:
**WO 2008/034968 (27.03.2008 Gazette 2008/13)**

(54) **PROCEDE DE MESURE QUANTITATIVE DE CIBLES BIOMOLECULAIRES DEPOSEES SUR UNE BIOPUCE, ET DISPOSITIF POUR SA MISE EN OEUVRE.**

VERFAHREN ZUR QUANTITATIVEN MESSUNG VON AUF EINEM BIOCHIP ABGELAGERTEN BIOMOLEKULAREN TARGETS UND GERÄT ZU SEINER IMPLEMENTIERUNG

METHOD FOR THE QUANTITATIVE MEASUREMENT OF BIOMOLECULAR TARGETS DEPOSITED ON A BIOCHIP, AND DEVICE FOR IMPLEMENTING IT

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.09.2006  FR 0608091**

(43) Date de publication de la demande:
**10.06.2009  Bulletin 2009/24**

(73) Titulaire: **Commissariat à l'Énergie Atomique et aux Énergies Alternatives**
**75015 Paris (FR)**

(72) Inventeurs:
• **UGOLIN, Nicolas**
**F-75002 Paris (FR)**
• **MENUT, Denis**
**F-94000 Creteil (FR)**
• **LE MEUR, Julien**
**F-29930 Pont-aven (FR)**
• **WODLING, Pascal**
**F-92260 FONTENAY AUX ROSES (FR)**
• **CHEVILLARD, Sylvie**
**F-94270 Le Kremlin-bicetre (FR)**

(74) Mandataire: **Bolinches, Michel Jean-Marie et al**
**Cabinet Orès**
**36, rue de St Pétersbourg**
**75008 Paris (FR)**

(56) Documents cités:
**WO-A-02/063284     US-A1- 2006 105 354**
**US-B1- 6 407 811**

• **CUZIN M: "DNA chips: a new tool for genetic analysis and diagnostics" TRANSFUSION CLINIQUE ET BIOLOGIQUE, ARNETTE-BLACKWELL, PARIS, FR, vol. 8, no. 3, juin 2001 (2001-06), pages 291-296, XP002356228 ISSN: 1246-7820**
• **AL-JEFFERY M O ET AL: "On the use of LIBS and LIFS for rapid detection of Rb traces in blood" PROC SPIE INT SOC OPT ENG; PROCEEDINGS OF SPIE - THE INTERNATIONAL SOCIETY FOR OPTICAL ENGINEERING 2002, vol. 4613, 2002, pages 152-161, XP002429663**
• **DELUCIA F C ET AL: "Laser-Induced Breakdown Spectroscopy (LIBS): A Promising Versatile Chemical Sensor Technology for Hazardous Material Detection" IEEE SENSORS JOURNAL, IEEE SERVICE CENTER, NEW YORK, NY, US, vol. 5, no. 4, août 2005 (2005-08), pages 681-689, XP011136161 ISSN: 1530-437X**

EP 2 067 022 B1

Printed by Jouve, 75001 PARIS (FR)

**Description**

La présente invention concerne un procédé de mesure quantitative de cibles biomoléculaires ayant été déposées sur une biopuce, et un dispositif pour la mise en oeuvre de ce procédé. L'invention s'applique notamment à la mesure quantitative d'acides nucléiques non marqués ayant été hybridés sur des sondes de cette biopuce.

Les biopuces représentent une révolution majeure dans les techniques de biologie moléculaire de ces dix dernières années. En permettant l'étude simultanée du niveau d'expression de plusieurs centaines, voire de plusieurs milliers de gènes, elles permettent d'appréhender l'impact d'une maladie ou d'un stress (e.g. résultant d'une radiation, d'une pollution ou de la prise d'un médicament) au niveau du génome complet d'un individu. Ces techniques deviennent ainsi de plus en plus utilisées en biologie moderne.

Les biopuces se répartissent en deux grandes familles, comprenant les puces microfluidiques et les puces à matrices de sondes. Ces dernières sont organisées en matrices de « spots » ou points de mesure, et elles sont généralement obtenues en déposant ou en synthétisant à des coordonnées précises sur un support passif des sondes moléculaires formées de biopolymères tels que de l'ADN, des protéines ou des anticorps, par exemple. Ces biopuces à matrices de sondes permettent d'identifier les cibles présentes dans un échantillon biologique lorsque ces cibles viennent s'hybrider spécifiquement au niveau de chaque « spot » de sondes.

Il existe, d'une part, les biopuces à haute complexité (plus de 5000 spots) pour les études pan-génomiques et, d'autre part, les biopuces à basse et à moyenne complexité, qui sont dédiées à une thématique donnée (e.g. tests thérapeutiques, détecteur biologique).

La technologie actuelle des biopuces à matrices de sondes présente un certain nombre de limitations majeures, notamment :

- le fort encombrement stérique des marqueurs fluorescents, qui modifie de façon sporadique la reconnaissance entre les sondes et les cibles et entraîne ainsi de nombreux artéfacts de mesure diminuant la reproductibilité des expériences ;
- l'absence de mesure quantitative, qui interdit de comparer les niveaux d'expression entre deux cibles différentes ; et
- le coût élevé de cette technologie actuelle, tant en production qu'en mise en oeuvre.

C'est la raison pour laquelle plusieurs alternatives à cette technologie ont été développées récemment, avec en particulier :

- les technologies « RT PCR » en carte microfluidique (« Reverse Transcriptase Polymerase Chain Reaction », soit une amplification en chaîne par polymérisase après transcription inverse d'un acide ribonucléique en ADN complémentaire), qui permettent d'amplifier jusqu'à 386 cibles différentes en parallèle, avec une simplification de la mise en oeuvre et une amélioration de la détection qui sont toutefois pénalisées par l'absence de mesure quantitative pour une réelle comparaison entre les cibles, par la limitation du nombre de cibles à analyser (bien en dessous d'une biopuce de basse complexité) et par un coût élevé de mise en oeuvre ;
- les biopuces sur film « Nylon », basées sur l'hybridation des cibles dans un grand volume et un marquage en chimiluminescence, qui procurent également une mise en oeuvre simplifiée et une détection améliorée, mais qui sont néanmoins pénalisées par l'absence de mesure quantitative, le grand volume de réaction requis (limitant pour les analyses d'échantillons de faible concentration) et les coûts très élevés de production et de mise en oeuvre ; et
- de nouveaux concepts de biopuces sans marquage, qui sont basés sur la détection de la cible par mesure de l'impédance ou par la résonance plasmonique de surface (« SPR » ou « Surface Plasmon Resonance »), et qui ont été notamment décrits dans David F et al., Bioscience Bioelectron. 2005, dans Li C. M. et al., Front Biosci. 2005 ou dans Macanovic A. et al., Nucleic Acid Research 2004, mais qui ne permettent pas une quantification du nombre de cibles, posent problème pour réaliser des puces à haute densité et impliquent, tant pour la technique de mesure de l'impédance que pour la technique« SPR », des artéfacts de mesure dus aux tailles et aux conformations variables des cibles.

Des procédés de spectrométrie « ICP » (« Inductively Coupled Plasma », i.e. spectrométrie de masse couplée à un plasma induit) ont également été mis au point, cf. Inchul Yang et al., Analytical Biochemistry (2004), vol.335, 150-161 ou Heinrich F. Arlinghaus et al., Analytical Chemistry (1997), vol.69, n°18, 3747-3753, procédés qui permettent de doser le phosphore contenu dans un acide nucléique pour estimer par exemple le taux d'hybridation de celui-ci sur une biopuce à « PNA » (« Peptide Nucleic Acid », i.e. acides nucléiques peptides).

Toutefois, il apparaît que l'utilisation de la spectrométrie de masse pour doser le phosphore à partir d'un plasma généré à la surface d'une biopuce est une méthode lente (prenant-typiquement plusieurs heures pour 1 cm$^2$ sur la biopuce), et que l'instrumentation nécessaire à sa mise en oeuvre est coûteuse. De plus, il est à noter que cette technique de spectrométrie « ICP » n'est pas quantitative, car elle ne fournit que la quantité brute de nucléotides hybridés, sans pouvoir différentier entre la taille et le nombre des biomolécules.

Le document de Brevet US-A-2006/0105354 présente une méthode de quantification en temps réel d'une multitude de cibles formées d'acides nucléiques marqués et qui se sont liées à la surface d'une biopuce de type à matrice de sondes, comprenant notamment l'émission d'un faisceau laser d'excitation à la surface de la matrice et la mesure de l'émission lumineuse des cibles hybridées en réponse à ce faisceau d'excitation.

Un inconvénient majeur de cette méthode est qu'elle n'est pas non plus quantitative au sens indiqué ci-dessus, et qu'elle requiert en outre la présence de molécules marquées liées aux molécules cibles.

Les documents Cuzin M: "DNA chips: a new tool for genetic analysis and diagnostics" Transfusion clinique et biologique, ARNETTE-BLACKWELL, vol. 8, no. 3, juin 2001, pages 291-296; Al-Jeffery M O et al.: "On the use of LIBS and LIFS for rapid detection of Rb traces in blood; PROCEEDINGS OF SPIE - THE INTERNATIONAL SOCIETY FOR OPTICAL ENGINEERING 2002, vol. 4613, 2002, pages 152-161; et US 6 407 811 forment également l'état de l'art pertinent.

Un but de la présente invention est de proposer un procédé de mesure quantitative de cibles biomoléculaires ayant été déposées sur une biopuce de type à matrice de sondes hybridées par ces cibles, ladite matrice comportant une multitude de points de mesure ou « spots » comprenant chacun une pluralité de ces sondes, qui remédie à l'ensemble des inconvénients précités.

A cet effet, le procédé de mesure selon l'invention comprend les étapes suivantes :

a) on focalise au moins un faisceau laser sur chaque point de mesure, pour en extraire un plasma chaud et confiné comprenant un élément chimique à quantifier qui est présent dans lesdites cibles et, optionnellement, en outre dans lesdites sondes,

b) on détecte et l'on analyse des raies lumineuses d'émission dudit plasma pour chaque point de mesure, en mesurant les intensités respectives de ces raies, puis

c) on détermine, via un étalonnage préalable de ces raies établissant une corrélation entre les intensités des raies propres audit élément à quantifier et des concentrations données de cet élément, la concentration dans chaque point de mesure dudit élément ou d'un groupe l'incorporant au sein desdites cibles.

On notera que cette corrélation entre intensités de raies y et concentrations x est avantageusement de type linéaire (i.e. une relation de proportionnalité, à une constante affine près, selon l'équation $y = ax + b$).

On notera également que ce procédé selon l'invention permet de « scanner » (i.e. analyser en un balayage) rapidement et efficacement l'ensemble des points de mesure de la biopuce, et de déduire de l'étape c) précitée le nombre d'atomes dudit élément dans chaque point de mesure, pour en déduire le nombre de sondes ayant été hybridées par lesdites cibles, le tout en quelques minutes seulement.

Pour quantifier les cibles hybridées sur la biopuce, on notera qu'il est nécessaire que la taille de ces cibles soit connue ou calibrée.

Selon une autre caractéristique de l'invention, antérieurement à l'étape a), l'on traite avantageusement chaque cible lors d'une étape de calibration (encore appelée normalisation par l'homme de l'art) pour que sa taille soit sensiblement égale à celle de chaque sonde, de sorte à éliminer les parties non hybridées des cibles. Cette étape de calibration est de préférence mise en oeuvre en traitant la biopuce par une enzyme de type nucléase, telle qu'une exonucléase, qui est apte à dégrader tous les acides nucléiques à simple brin qui sont présents sur chaque point de mesure pour ne conserver que des doubles brins sonde/ cible.

De préférence, le ou chaque faisceau laser utilisé à l'étape a) est émis dans la gamme infrarouge - visible - ultraviolet selon une impulsion de durée comprise entre 1 fs et 100 ns, avec une fréquence comprise entre 10 Hz et 100 kHz et une énergie comprise entre 1 mW et 1 kW.

A titre encore plus préférentiel, ledit ou chaque faisceau laser est émis dans l'ultraviolet à une longueur d'onde de 266 nm ou 193 nm, en utilisant par exemple les harmoniques d'un laser Nd : YAG (laser à grenat d'yttrium et d'aluminium dopé au néodyme), et selon une impulsion de durée sensiblement égale à 10 ns.

Egalement à titre préférentiel, ledit ou chaque faisceau laser présente une densité de puissance à la surface de chaque point de mesure qui est supérieure à 1 GW.cm$^{-2}$, en utilisant un laser compact et des lentilles de focalisation, pour l'obtention par vaporisation d'un plasma chaud à durée de vie d'environ 2 $\mu$s.

A ces très hautes densités d'énergie, on notera qu'une partie du matériau de chaque point de mesure est éjectée de la biopuce par le phénomène de vaporisation, et ce plasma chaud, très lumineux et à durée de vie très courte est généré. Ce matériau ablaté sous forme de plasma est dissocié en ses divers constituants atomiques et ioniques et, à la fin de chaque impulsion laser, ce plasma refroidit rapidement. Durant cette période, les atomes et les ions excités émettent des radiations lumineuses qui leur sont caractéristiques du fait de leur retour à des niveaux d'énergies plus bas.

Selon une autre caractéristique de l'invention, l'on confine le plasma généré par ledit ou chaque faisceau de telle sorte que ce plasma n'interfère pas avec les autres points de mesure à analyser, et l'on détecte simultanément les raies d'émissions du plasma correspondant audit ou à chaque faisceau.

Avantageusement, l'on peut adjoindre au ou à chaque plasma confiné au moins un agent d'activation du plasma, tel que de l'argon, de l'hélium, de l'azote ou un mélange de ces différents gaz.

Egalement avantageusement, on peut utiliser un unique faisceau laser qui ablate chaque point de mesure selon une surface de côté compris entre 1 μm et 50 μm, et l'on déplace alors relativement la biopuce par rapport au faisceau via des micro-déplacements planaires selon un pas compris entre 1 μm et 100 μm, pour balayer la totalité desdits points de mesure.

En variante, l'on peut déplacer simultanément plusieurs faisceaux lasers en mouvement relatif par rapport à la biopuce, pour que ces faisceaux ablatent la totalité des points de mesure.

Selon une autre caractéristique de l'invention, l'on utilise avantageusement la technique de spectroscopie d'émission optique induite par laser (« LIBS » en abrégé pour « Laser Induced Breakdown Spectroscopy ») pour la mise en oeuvre des étapes a) à c) et, de préférence, on utilise en parallèle la technique de fluorescence induite par laser (« LIF » en abrégé pour « Laser Induced Fluorescence ») pour ces mêmes étapes.

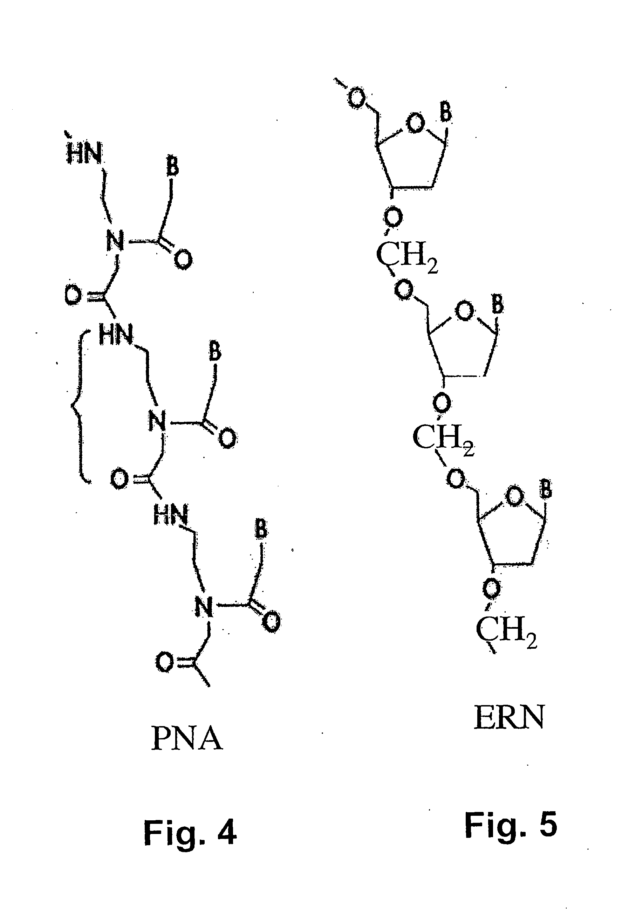

Avantageusement, l'on utilise des cibles comprenant des acides nucléiques non marqués, et des sondes choisies dans le groupe constitué par les acides nucléiques, les acides nucléiques peptides (« PNA », voir la figure 4 annexée pour la formule chimique d'un motif caractéristique), les acides nucléiques verrouillés (« LNA ») et les éthers ribonucléiques (« ERN », voir la figure 5 annexée pour la formule chimique d'un motif caractéristique) qui sont transparents pour la technique « LIBS » à une longueur d'onde de 254 nm ou de 194 nm.

On notera que ces molécules, résistantes aux digestions enzymatiques par les exonucléases, permettent de protéger les parties des cibles d'acides nucléiques hybridées avec les sondes lors d'une digestion. Après digestion, les cibles d'acides nucléiques hybridées sont ainsi toutes connues de l'opérateur et équivalentes à celles des sondes.

On notera également que le procédé de mesure quantitative selon l'invention peut également être adapté pour l'étude des protéines, en utilisant des anticorps couplés avec des acides nucléiques (la séquence d'acide nucléique servant d'ancre et de balise pour la reconnaissance des anticorps).

Avantageusement, l'on utilise le phosphore uniquement présent dans ces cibles d'acides nucléiques à titre d'élément à quantifier pour la détection dans le plasma, à l'étape b), de raies d'émission atomiques et ioniques du phosphore. En variante, on peut utiliser pour cette détection le phosphore présent à la fois dans les cibles d'acides nucléiques et dans les sondes, lesquelles comprennent également dans ce cas des acides nucléiques (donc de l'acide phosphorique), suite à une étape de différenciation préalable entre cibles et sondes.

Egalement avantageusement, on détecte à l'étape b) les raies d'émission du phosphore à une longueur d'onde de valeur choisie dans le groupe constitué par 138 ± 3 nm, 148 ± 3 nm, 154 ± 3 nm, 167 ± 3 nm, 177 ± 3 nm, 190 ± 3 nm, 193 ± 3 nm, 203 ± 3 nm, 213 ± 3 nm et 253 ± 3 nm.

Encore plus avantageusement, l'on détecte à l'étape b) les raies d'émission du phosphore à une longueur d'onde de 203 ± 3 nm.

On notera que l'utilisation de sondes et de cibles toutes deux formées d'acides nucléiques permet d'augmenter la sensibilité de la détection en augmentant le taux de phosphore mesuré. Cependant, dans certaines configurations, il peut être avantageux d'utiliser des sondes « PNA », notamment lorsque les concentrations des cibles sont très faibles. En effet, l'affinité très élevée des « PNA » pour les acides nucléiques permet de piéger toutes les cibles oligonucléotidiques présentes dans le milieu à analyser.

De plus, comme les « PNA » sont capables de se fixer spontanément à une surface d'or par leur extrémité COOH ou NH, ces molécules « PNA » sont particulièrement avantageuses pour des dépôts de sondes sur un support plastique de biopuce (e.g. en polyimide « Kapton ») recouvert d'une couche d'or de quelques microns d'épaisseur.

Le fait que les « PNA » ne contiennent pas de phosphore, et plus généralement aucun atome ayant une raie d'émission propre à 253 nm, à 194 nm ou 203 nm, permet à la limite de réaliser la quantification des cibles oligonucléotidiques directement après l'hybridation, sans avoir recours à l'étape de calibration précitée pour dégrader les simples brins. Toutefois, pour que les mesures selon l'invention soient absolument quantitatives, on devra réaliser cette calibration des cibles.

On notera toutefois que le procédé selon l'invention pourrait s'appliquer à un élément chimique à détecter dans un plasma autre que le phosphore, par exemple l'iode, à titre non limitatif.

Afin d'améliorer les limites de détection, on peut avantageusement :

(i) mettre en oeuvre la technique « LIBS » en effectuant une double impulsion laser de type « double pulse LIBS », et/ou
(ii) utiliser cette technique « LIBS » en parallèle avec la technique « LIF » (i.e. une combinaison « LIBS-LIF »).

Via l'une et/ou l'autre de ces deux méthodes préférentielles (i) et (ii), on parvient notamment à maintenir plus longtemps et à amplifier les raies d'émission du phosphore et, grâce à l'obtention d'un meilleur rapport signal sur bruit, d'abaisser ainsi d'un facteur au moins égal à dix le seuil de détection du phosphore et donc des acides nucléiques dont il est issu.

Concernant spécifiquement cette méthode (i) de double impulsion laser, on peut la mettre en oeuvre avec un autre angle et un autre faisceau pour l'impulsion seconde (puissance, fréquence, longueur d'onde), mais également avec le même angle et/ou avec un faisceau laser de même nature que celui de l'impulsion première. En effet, compte tenu de la durée de vie d'environ 2μs du plasma, ce dernier est optiquement analysable à partir de 100 ns environ après sa formation (fin du rayonnement de type corps noir et émergence des raies atomiques et ioniques recherchées).

Cette seconde impulsion laser, peu de temps avant son extinction, permet de prolonger la durée de vie du plasma et d'amplifier l'émission émise. On choisit avantageusement une longueur d'onde pour laquelle l'atome ou les atomes visés a (ont) une forte absorption ou émission, autrement dit une longueur d'onde caractéristique de l'atome.

Par exemple dans le cas du phosphore à titre d'élément chimique à quantifier dans le procédé de l'invention, on peut réaliser la seconde excitation à 254 nm, à 193 nm, à 153 nm ou à 203 nm, et la détection avec une observation à ces mêmes longueurs d'onde (l'absorption importante par l'air des rayonnements à 193 nm et à 153 nm peut atténuer sensiblement la fluorescence du plasma à ces longueurs d'onde).

Il est ainsi possible d'augmenter l'émission lumineuse des ions et/ou des atomes ciblés (en l'occurrence le phosphore), en exaltant leur fluorescence propre par cette seconde impulsion laser.

Selon une autre caractéristique du procédé selon l'invention, l'ablation de matière de la biopuce et la formation du plasma peuvent être découplées. Dans ce cas, une première impulsion laser ablate une partie de la surface de la biopuce et l'expulse au-dessus de celle-ci, puis une seconde impulsion utilisant avantageusement un laser de type femtoseconde à une fréquence de 100 Hz à 100 kHz crée le plasma et génère l'émission caractéristique de ses constituants. Eventuellement, une troisième impulsion peut être ensuite utilisée pour exalter la fluorescence des composés ciblés.

Le procédé selon l'invention permet ainsi de détecter efficacement et rapidement des acides nucléiques sans marquage de ces derniers, notamment à partir de la fluorescence des atomes de phosphore constitutifs des molécules d'acides nucléiques après l'émission d'un plasma. Pour disposer d'une mesure véritablement quantitative de ces molécules d'acides nucléiques, on procède nécessairement à la calibration précitée des cibles via une normalisation de leurs tailles respectives.

Un dispositif selon l'invention pour la mise en oeuvre du procédé de mesure quantitative tel que défini ci-dessus comporte :

- une biopuce de type à matrice de sondes hybridées par des cibles biomoléculaires, la matrice comportant une multitude de points de mesure ou « spots » comprenant chacun une pluralité desdites sondes,
- une unité de génération et de confinement de plasma qui comprend des moyens de focalisation d'au moins un faisceau laser sur des points de mesure pour en extraire un plasma chaud contenant un élément chimique à quantifier, tel que le phosphore, présent dans lesdites cibles et optionnellement en outre dans lesdites sondes, et des moyens pour confiner le ou chaque plasma ainsi extrait,
- une unité de spectrographie qui est reliée à ladite unité de génération de plasma et qui est adaptée pour détecter et analyser des raies lumineuses d'émission du plasma pour chaque point de mesure, de telle sorte que l'on détermine la concentration dans chaque point de mesure dudit élément à partir d'une corrélation entre les intensités des raies propres audit élément à quantifier et des concentrations données de cet élément.

Avantageusement, les cibles hybridant ces sondes comprennent des acides nucléiques non marqués, et lesdites sondes sont choisies dans le groupe constitué par les acides nucléiques, les acides nucléiques peptides (« PNA »), les acides nucléiques verrouillés (« LNA ») et les éthers ribonucléiques (« ERN »).

Selon une autre caractéristique de l'invention, la taille de chaque cible est avantageusement sensiblement égale à celle de chaque sonde suite à l'étape de calibration précitée, toutes les cibles de chaque point de mesure étant alors hybridées.

Comme indiqué précédemment, l'analyse optique du plasma généré point par point à la surface de la biopuce permet de reconstituer une image en chaque point de mesure de la quantité d'atomes de phosphore, et donc de la quantité de nucléotides au sein des acides nucléiques formant les cibles hybridées. Il est ainsi possible d'en déduire les taux d'hybridation de chaque point ou « spot » de la biopuce.

On notera que pour réaliser une quantification de manière absolue du nombre d'oligonucléotides hybridés sur chaque « spot », il est indispensable que le matériau constitutif de la biopuce ne contienne pas de phosphore. La Demanderesse a établi qu'un support de biopuce constitué de polyimide, tel que du « Kapton », ou de ce polyimide recouvert d'une couche d'or, est neutre et particulièrement bien adapté pour réaliser des mesures par la technique « LIBS » à la longueur d'onde d'émission comprise entre 135 nm et 266 nm. Plus généralement, peuvent convenir pour la réalisation des biopuces selon l'invention tous les types de matériaux ne contenant pas du phosphore (e.g. plastique, verre, silice, etc.) et compatibles avec les matériels biologiques.

Les raies d'émission du plasma généré en chaque point de mesure peuvent par exemple être captées par une ou plusieurs fibres optiques d'acquisition dont l'extrémité libre est disposée à une distance du plasma comprise entre 0,5 mm et 10 mm. En raison de leur ouverture numérique élevée, la ou chaque fibre d'acquisition est coiffée d'un jeu de lentilles adéquates (collimateur de fibre) pour injecter correctement les rayonnements émis par le plasma.

Ce dispositif selon l'invention permet ainsi d'analyser la surface d'une biopuce, que l'on positionne avantageusement sur une table à micro-déplacements (suivant deux directions orthogonales X et Y). Les déplacements de la table permettent le balayage de toute la surface à analyser par le ou chaque faisceau laser avec, par exemple, un pas de 10 $\mu$m qui correspond à la zone ablatée à chaque impulsion du laser.

L'analyse optique du plasma généré point par point à la surface de la biopuce permet de reconstituer une image de la quantité d'atomes de phosphore en chaque point de mesure, qui est proportionnelle à la quantité de nucléotides. Il est donc possible d'en déduire les taux d'hybridation de chaque point de mesure (« spot ») sur la biopuce.

On notera que pour réaliser une quantification de manière absolue du nombre d'oligonucléotides hybridés sur chaque « spot », il est indispensable que le matériau constitutif de la biopuce ne contienne pas de phosphore.

Selon une autre caractéristique de l'invention, lesdits moyens pour confiner le ou chaque plasma extrait comportent au moins un arrangement de n chambre(s) à plasma (n $\geq$ 1) délimité par une enceinte qui surmonte la biopuce en étant ouverte sur cette dernière, ladite enceinte étant pourvue d'orifices d'excitation qui sont chacun destinés à recevoir un faisceau laser d'excitation apte à former ledit plasma et étant traversée par des fibres optiques d'acquisition des raies d'émission respectives de ces plasmas pour leur transmission à l'unité de spectrographie, ledit ou chaque arrangement de chambre(s) à plasma étant en mouvement relatif par rapport à la biopuce.

Cette ou ces chambre(s) permettent de confiner les plasmas produits et pour qu'il n'y ait pas d'interférence entre la lumière émise par ces différents plasmas dans le cas de plusieurs chambres. Quant à ladite enceinte, elle peut par exemple présenter une géométrie sensiblement parallélépipédique qui est adaptée pour entourer la chambre à plasma ou au moins une ligne de plusieurs chambres à plasma, et qui est formée par une technique de structuration mécanique ou au laser à partir d'une poudre ou d'un polymère liquide, telle que la stéréolithographie, le laminage, le frittage ou la photolithographie, ou encore par moulage.

En variante, la ou les chambre(s) à plasma peuvent être remplacées par une unique chambre close contenant la biopuce, dont au moins la face supérieure est réalisée en quartz ou en tout autre matériau transparent aux longueurs d'onde d'excitation et d'acquisition, cette chambre close étant équipée de valves de remplissage en gaz plasmogène (e.g. argon/azote) et de purge d'air.

Selon un premier mode de réalisation de l'invention, ladite unité de génération de plasma comporte des moyens pour émettre une pluralité de faisceaux lasers d'excitation et pour les acheminer respectivement et de manière simultanée à l'intérieur des chambres à plasma via lesdits orifices d'excitation.

Selon un premier exemple relatif à ce premier mode de réalisation, ces faisceaux laser d'excitation peuvent être respectivement issus de différentes sources lasers. Dans ce cas, l'orifice d'excitation de chaque chambre à plasma selon l'invention reçoit une fibre optique d'excitation qui est destinée à guider le faisceau laser correspondant à une longueur d'onde donnée et qui est pourvue à son extrémité libre d'une première lentille optique adaptée pour faire converger ce faisceau sur la biopuce.

Selon un second exemple relatif à ce premier mode de réalisation, ces faisceaux laser d'excitation peuvent être issus :

- d'une unique source laser qui émet un faisceau amont à plusieurs longueurs d'ondes superposées et de préférence distantes entre elles de 0,4 nm à 1 nm, et
- d'un démultiplexeur en longueurs d'ondes pour la séparation du faisceau amont en des faisceaux aval présentant respectivement autant de longueurs d'onde que de fibres optiques d'excitation destinées à les véhiculer.

Selon un second mode de réalisation de l'invention, ladite unité de génération de plasma comporte des moyens pour émettre un unique faisceau laser d'excitation et pour l'acheminer successivement à l'intérieur desdites chambres à plasma en le déplaçant d'un orifice d'excitation à un autre via une tête galvanométrique.

Conformément auxdits premier et second modes de réalisation de l'invention, chaque chambre à plasma peut être délimitée par une surface latérale de révolution dont le sommet est pourvu de l'un desdits orifices d'excitation, qui présente sur cette surface latérale un orifice d'acquisition recevant ladite fibre d'acquisition et qui débouche immédiatement au-dessus de la biopuce via une ouverture inférieure de ladite chambre, de sorte à confiner le plasma extrait de celle-ci par le faisceau laser correspondant.

De préférence, la surface latérale de chaque chambre à plasma est cylindrique ou conique en divergeant vers la biopuce, de hauteur comprise entre 2 mm et 10 mm et débouchant à une distance de cette dernière comprise entre 5 $\mu$m et 200 $\mu$m, avec un diamètre pour ladite ouverture inférieure qui est compris entre 1 mm et 5 mm.

Selon une autre caractéristique avantageuse de l'invention, ledit arrangement de chambres à plasma et ladite biopuce peuvent être respectivement montés mobiles selon deux axes X et Y orthogonaux, de telle manière qu'à chaque mouvement de la biopuce selon l'axe Y ledit arrangement effectue K mouvements selon l'axe X, où :

- K est défini par le rapport P/I de la distance P entre les fibres d'excitation respectives de deux chambres adjacentes et de la largeur I selon l'axe X de la surface ablatée à chaque impulsion laser, ce rapport étant modulé par le facteur de la forme de l'ablation après vaporisation, et où
- la distance P entre ces deux fibres d'excitation est définie par l'équation $P = L/(N-1)$ avec $N > 1$, L étant la largeur de la biopuce et N le nombre de fibres d'excitation dans ledit arrangement.

Egalement avantageusement, la distance P entre deux fibres d'excitation adjacentes est un multiple du pas entre deux points de mesure sur la biopuce.

Selon une autre caractéristique de l'invention, ladite enceinte peut être pourvue d'au moins un solénoïde adapté pour y générer un champ magnétique, de sorte à augmenter la durée de vie du ou de chaque plasma et/ou à contrôler sa forme, ainsi que la sélection des différentes particules chargées.

En plus de ce champ magnétique, on peut également générer un champ électrique via des moyens pouvant par exemple consister à utiliser à titre de support de la biopuce un matériau électriquement conducteur ou bien un support porteur d'une électrode à laquelle est associée une autre électrode portée par ladite enceinte pour générer une différence de potentiel.

De préférence, la fibre optique d'acquisition de chaque chambre à plasma est pourvue d'une seconde lentille optique à son extrémité libre débouchant dans la chambre, et la face interne de ladite surface latérale est conçue pour former localement un miroir concave apte à optimiser la réflexion des radiations lumineuses émises par le plasma en direction de ladite fibre d'acquisition.

Selon une autre caractéristique préférentielle de l'invention, ladite unité de spectrographie comprend au moins un spectrographe de type photomultiplicateur. On notera toutefois que l'on pourrait également utiliser, pour la détection des raies d'émission du plasma, un spectrophotomètre, une caméra de type « CCD » ou « CCD » intensifiée (« Charge Coupled Device », i.e. dispositif à couplage de charge) ou bien une « galette » de micro-canaux.

Egalement à titre préférentiel, un filtre optique transparent uniquement à la longueur d'onde souhaitée peut être agencé entre chaque fibre optique d'acquisition et le spectrographe.

Egalement avantageusement, ladite unité de génération de plasma peut également comporter des moyens auxiliaires pour l'émission d'un faisceau laser d'excitation seconde et pour l'introduction de ce faisceau d'une chambre à une autre, via au moins un orifice d'excitation seconde formé dans la partie inférieure de la surface latérale de chaque chambre à hauteur d'expansion du plasma ou d'expulsion de la matière extraite de la biopuce, chaque orifice d'excitation seconde étant alors formé à un emplacement prévu pour ne pas être affecté par la fibre d'acquisition ni par ledit miroir concave.

En relation avec ledit premier mode de réalisation de l'invention, lesdits moyens auxiliaires d'émission peuvent avantageusement comporter une tête galvanométrique apte à déplacer ledit faisceau d'excitation seconde d'un orifice d'excitation seconde à un autre et, dans ce cas, chaque orifice d'excitation seconde peut être pourvu d'une troisième lentille optique apte à faire converger le faisceau laser d'excitation seconde correspondant à ladite hauteur d'expansion ou d'expulsion.

En variante et en relation avec ledit second mode de réalisation de l'invention, chaque chambre à plasma peut avantageusement présenter une paire d'orifices d'excitation seconde se faisant face, de telle sorte que ces paires d'orifices soient alignées au sein dudit arrangement de chambres pour la focalisation à travers cet alignement d'un faisceau laser d'excitation seconde émis par lesdits moyens auxiliaires d'émission.

Selon une autre caractéristique de l'invention commune auxdits premier et second modes précités de l'invention, chaque chambre à plasma peut être en outre pourvue d'un orifice d'injection gazeuse qui est formé sur ladite surface latérale à proximité immédiate dudit orifice d'excitation et qui reçoit un conduit destiné à introduire un gaz inerte, tel que de l'argon ou de l'hélium, apte à appauvrir la chambre en oxygène et à activer le plasma lors de sa formation. On peut par exemple opérer sous pression réduite.

Selon un exemple préférentiel de réalisation de l'invention, chaque point de mesure peut comporter une bille magnétique ou paramagnétique, par exemple en polystyrène contenant des particules de cobalt, de nickel ou de leur oxyde, chaque bille présentant une couleur différente de celle du reste de la biopuce et de celle des autres points de mesure, de sorte que ces billes forment des mires aptes à être identifiées de manière univoque par un système de capture d'images dont est pourvue ladite unité de spectrographie.

Selon une autre caractéristique de cet exemple préférentiel selon l'invention, la biopuce peut comporter une feuille en matière plastique formant un écran magnétique, par exemple en polyimide (e.g. du « Kapton »), sur laquelle sont formés autant de trous que de billes et qui surmonte une lame aimantée apte à générer dans ces trous un champ magnétique d'intensité comprise entre 0,5 T et 5 T.

Selon un exemple de réalisation de l'invention, chaque bille est constituée de deux demi-sphères qui sont collées l'une à l'autre dans l'un desdits trous et dont seule la demi-sphère inférieure tournée vers ladite lame aimantée présente des propriétés paramagnétiques, lesdites sondes étant greffées sur la surface convexe de la demi-sphère supérieure qui est colorée pour former l'une des mires précitées.

En variante, chaque bille peut être constituée d'une demi-sphère supérieure colorée qui est destinée à former ladite mire et sur la surface convexe de laquelle sont greffées lesdites sondes, un cône présentant des propriétés paramagnétiques étant collé par sa base sous la tranche de cette demi-sphère et du côté de ladite lame aimantée, à l'intérieur desdits trous.

On notera que cette dernière géométrie de bille, qui est asymétrique par rapport au plan horizontal médian de la bille (parallèle à la surface de la biopuce), permet avantageusement d'améliorer le rendement du procédé selon l'invention.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec les dessins joints, parmi lesquels :

la figure 1 représente des clichés illustrant les raies d'émissions du phosphore dans un plasma obtenu par le procédé de l'invention, pour des échantillons cibles caractérisés par différentes concentrations d'oligonucléotides (en abrégé « échantillon OLIGOs »),

les figures 2 et 3 sont des graphiques illustrant la relation de proportionnalité (à une constante près) mesurée entre les intensités de ces raies d'émission et les concentrations ou rapports de dilution testés, respectivement,

les figures 4 et 5 représentent les séquences caractéristiques des formules chimiques respectives des « PNA » et des « ERN », utilisables comme sondes sur la biopuce à matrice de sondes selon l'invention,

la figure 6 est une vue schématique partielle en perspective d'un dispositif de mesure quantitative selon un premier mode de réalisation de l'invention,

la figure 7 est une vue schématique latérale illustrant l'espacement entre l'arrangement de chambres à plasma et la biopuce qui sont inclus dans le dispositif de la figure 6,

la figure 8 est une vue schématique en perspective d'une chambre à plasma incluse dans l'arrangement du dispositif de la figure 6,

la figure 9 est une vue de dessus de la chambre à plasma de la figure 8,

les figures 10 et 11 sont des vues schématiques en perspective illustrant respectivement la formation d'un plasma à un instant t dans la chambre de la figure 8 et l'acquisition, à partir de cette chambre, de ses raies d'émission à un instant t+$\Delta$t,

la figure 12 est un schéma de principe d'un démultiplexeur par filtrage en cascade utilisable selon l'invention pour décomposer un faisceau laser d'entrée en une pluralité de faisceaux laser de sortie, pour leur guidage dans des fibres optiques d'excitation de la biopuce,

la figure 13 est un médaillon illustrant un composant du démultiplexeur illustré à la figure 12,

les figures 14 et 15 sont deux autres schémas de principe d'un multiplexeur-démultiplexeur à réseau de diffraction, qui est également utilisable comme variante selon l'invention du dispositif des figures 12 et 13,

la figure 16 est une vue schématique partielle en perspective d'un dispositif de mesure quantitative selon un second mode de réalisation de l'invention correspondant à une variante de la figure 6,

la figure 17 est une vue schématique latérale illustrant l'espacement entre l'arrangement de chambres à plasma et la biopuce qui sont inclus dans le dispositif de la figure 16,

la figure 18 est une vue schématique en perspective d'une chambre à plasma incluse dans l'arrangement du dispositif de la figure 16,

la figure 19 est une vue de dessus de la chambre à plasma de la figure 18,

les figures 20 et 21 sont des vues schématiques en perspective illustrant respectivement la formation d'un plasma à un instant t dans la chambre de la figure 18 et l'acquisition, à partir de cette chambre, de ses raies d'émission à un instant t+$\Delta$t,

la figure 22 est une vue schématique en coupe méridienne d'une bille formant chaque point de mesure d'une biopuce à matrice de sondes selon l'invention, selon un premier exemple de l'invention,

la figure 23 est une vue schématique en coupe méridienne d'une bille formant chaque point de mesure d'une biopuce à matrice de sondes selon l'invention, selon un second exemple de l'invention,

la figure 24 est une vue schématique en coupe méridienne d'une bille formant chaque point de mesure d'une biopuce à matrice de sondes selon l'invention, selon un troisième exemple de l'invention,

les figures 25 et 26 sont deux vues schématiques locales en perspective et partiellement en coupe de biopuces selon l'invention incorporant les billes de la figure 22 et de la figure 24, respectivement,

la figure 27 est un schéma de procédé illustrant les principales étapes de fabrication des billes d'une biopuce selon la figure 25,

la figure 28 est un graphique illustrant la position et l'intensité relative des raies atomiques émises par le phosphore, par rapport à sa raie la plus intense, en fonction de la longueur d'onde,

la figure 29 est un graphique illustrant à titre de comparaison les positions et les intensités des raies d'émission des éléments P, Fe, $Fe^+$, Si et C dans la gamme spectrale 160 nm - 260 nm,

la figure 30 est un graphique illustrant plus précisément la localisation et l'environnement de la zone d'étude retenue pour la longueur d'onde des raies d'émission du phosphore, en comparaison des éléments Fe et Si,

la figure 31 est une vue schématique partielle en coupe longitudinale d'une chambre à plasma que comprend un dispositif de mesure quantitative selon l'invention, tel que celui de la figure 6, illustrant notamment son montage sur l'optique de focalisation et l'agencement du conduit d'amenée de gaz plasmogène dans cette chambre,

la figure 32 est une variante de la figure 31 illustrant en outre, pour chaque chambre à plasma, l'agencement de fibres optiques,

la figure 33 est une variante de la figure 32 illustrant une chambre à plasma constituée par une cellule hermétiquement close renfermant la biopuce et équipée de valves de remplissage en gaz plasmogène et de purge d'air,

la figure 34 est une vue partielle en perspective de l'agencement de la cellule hermétiquement close contenant la biopuce selon la figure 33,

la figure 35 illustre en termes d'angle solide la manière dont est émis le plasma dans chacune des chambres du dispositif selon l'invention, entre l'objectif de l'optique de focalisation et le point d'analyse de la biopuce siège de l'émission de raies, et

les figures 36 et 37 illustrent les caractéristiques d'un exemple de système optique d'acquisition utilisable selon l'invention de type fibre optique - filtre interférentiel/ photomultiplicateur « CPM ».

Pour quantifier les acides nucléiques cibles qui se sont hybridés sur les sondes d'une biopuce à matrice de sondes par le procédé de l'invention, on rappelle qu'il est nécessaire que la taille de ces cibles soit connue ou calibrée.

Pour obtenir cette calibration, on a traité les biopuces après hybridation par une enzyme de type exonucléase, telle que la Phosphosdiesterase 1 de venin, l'exonucléase I, etc., qui est capable de dégrader tous les acides nucléiques simple brin présents sur la biopuce. Après ce traitement par exonucléase et un lavage, seuls les double brins sonde/cible sont présents sur les biopuces avec des cibles ayant exactement la taille des sondes (à l'encombrement stérique près de l'exonucléase).

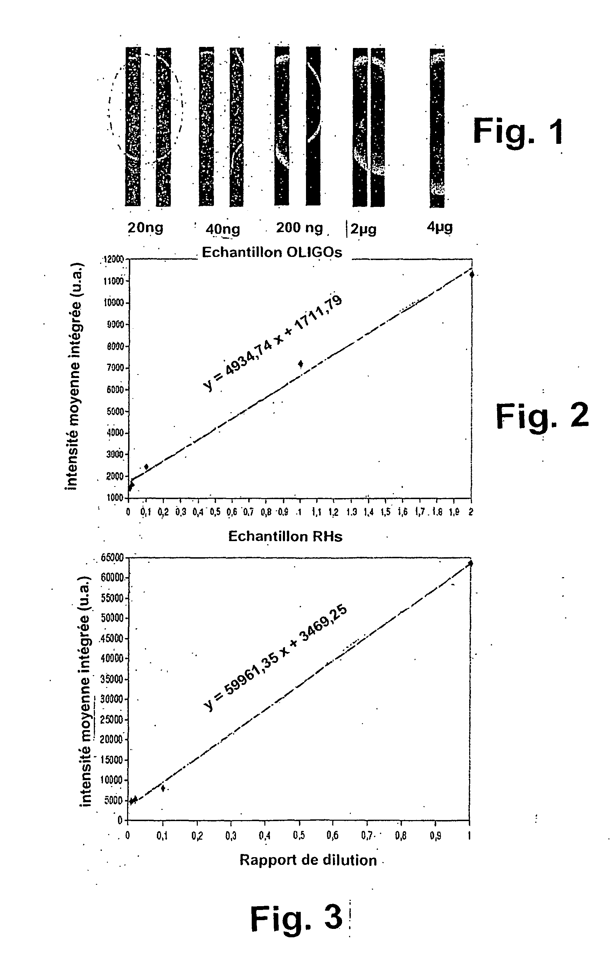

La concentration de phosphore mesurée est alors proportionnelle aux taux d'hybridation, pour peu que la taille et la densité des sondes soient parfaitement calibrées. En effet, comme illustré aux graphiques des figures 2 et 3, l'intensité du signal d'émission mesuré est linéairement corrélée à la concentration d'un oligonucléotide (testé sur 19mer) présent sur une feuille de polyimide de dénomination « Kapton » formant le support de la biopuce (voir figure 1).

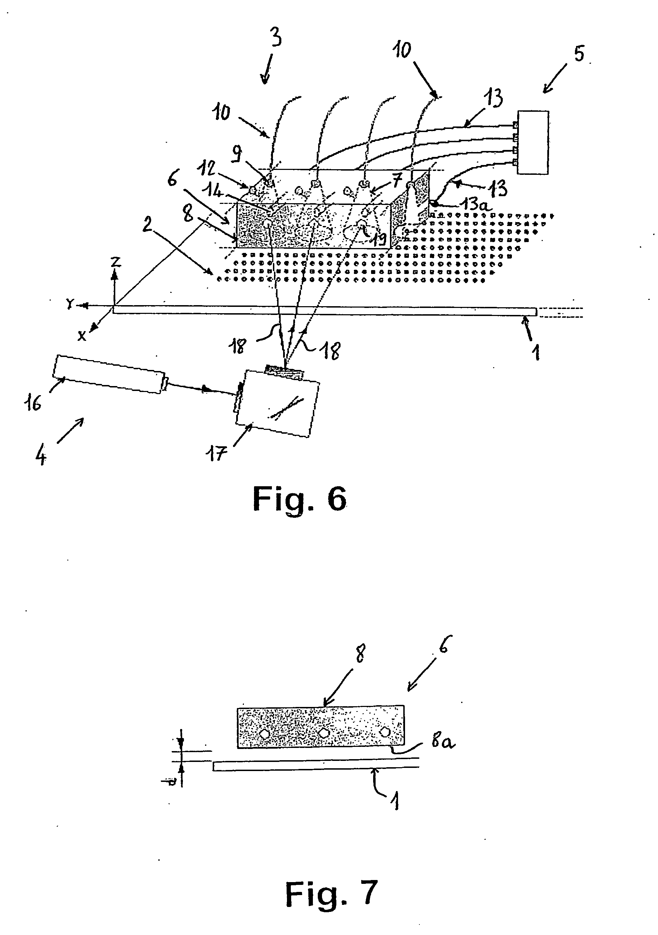

Le dispositif de mesure selon un premier mode de réalisation de l'invention, qui est illustré aux figures 6 à 11, utilise en parallèle les techniques « LIBS » et « LIF », et il comporte essentiellement :

-     une biopuce 1 de type à matrice de sondes hybridées par des cibles et comportant une multitude de « spots » 2 de sondes,
-     une unité de génération et de confinement de plasma qui comprend des moyens de focalisation 3 et 4 de plusieurs faisceaux laser en différents points de la biopuce 1 et de manière simultanée, pour extraire en chacun d'entre eux un plasma chaud contenant un élément chimique à quantifier, tel que le phosphore, qui est uniquement présent dans ces cibles, et des moyens pour confiner le ou chaque plasma ainsi extrait, et
-     une unité de spectrographie 5 qui est reliée à l'unité de génération et de confinement de plasma et qui est adaptée pour détecter et analyser des raies d'émission du plasma pour chaque « spot » 2, de sorte que l'on détermine la concentration dans chaque « spot » 2 dudit élément à partir d'une corrélation entre les intensités des raies propres audit élément et des concentrations données de cet élément.

Comme illustré à la figure 6, les moyens de confinement sont formés d'un arrangement 6 de n chambre(s) à plasma 7 (n ≥ 1) dont les parois sont par exemple en forme de cône droit divergeant vers la biopuce 1 (des formes cylindriques sont également envisageables). Cet arrangement 6 est délimité par une enceinte 8 par exemple de forme parallélépipédique qui surmonte la biopuce 1 en étant ouverte sur cette dernière et qui est en mouvement relatif par rapport à cette biopuce 1.

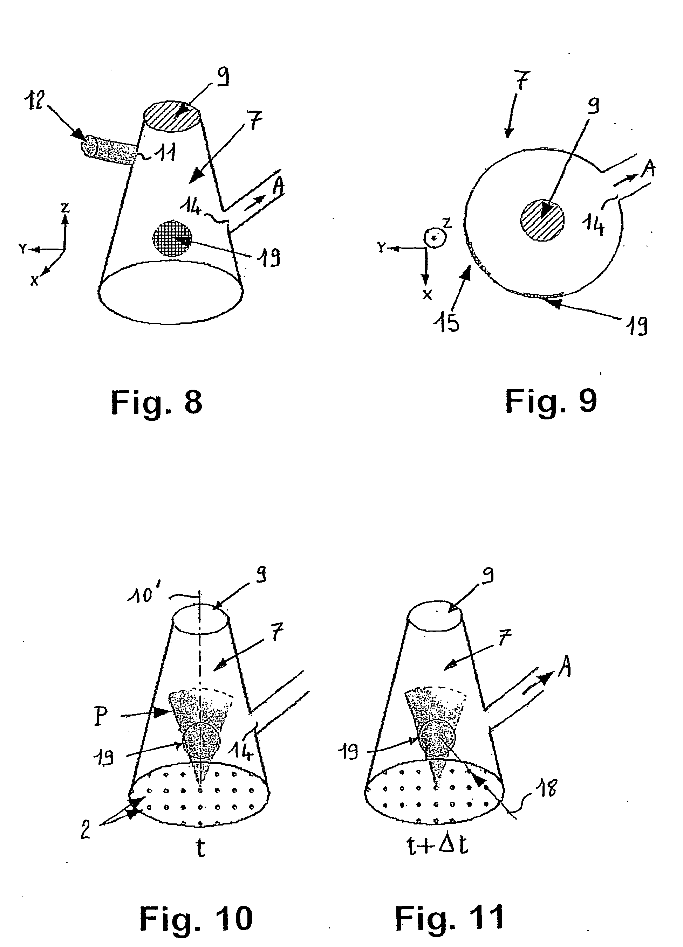

L'enceinte 8 est pourvue de N orifices d'excitation première 9 qui sont respectivement formés aux sommets des chambres 7 et qui sont destinés à recevoir N fibres optiques d'excitation première 10 véhiculant N faisceaux laser d'excitation première 10' (voir figure 10) et adéquates pour la longueur d'onde utilisée. Une lentille optique, telle qu'une lentille liquide (non représentée), est accolée à l'extrémité libre de chaque fibre 10, pour que le faisceau 10' correspondant soit convergent à la surface de la biopuce 1.

En fonctionnement, ces faisceaux 10' sont ainsi focalisés sur chaque « spot » par les moyens de focalisation 3 précités, en vue de former le plasma précité à analyser via la technique « LIBS » ou bien d'ablater seulement dans un premier temps la matière de la biopuce 1.

Comme illustré à la figure 7, le bord inférieur 8a de l'enceinte 8 est de préférence séparé de la biopuce 1 d'une distance d comprise entre 5 μm et 200 μm. Quant aux chambres à plasma 7, elles présentent par exemple chacune une hauteur (selon l'axe Z) allant de 2 mm à 10 mm et une ouverture inférieure (base du cône ou extrémité du cylindre) de diamètre pouvant aller de 1 mm à 5 mm.

Chaque chambre à plasma 7 est en outre pourvue, sur sa paroi latérale conique (voir figure 8), d'un orifice ou pore d'injection gazeuse 11 qui est de préférence adjacent à l'orifice d'excitation première 9 correspondant et qui reçoit un conduit 12, tel qu'un tuyau ou durite, qui est d'axe sensiblement perpendiculaire à une génératrice du cône formé par la chambre 7 et qui permet d'injecter un gaz neutre tel que l'argon. En effet, afin de limiter l'absorption de la lumière ultraviolette émise par le plasma dans le cas de cibles formées d'acides nucléiques, on chasse ainsi l'oxygène de l'air qui se trouve dans chaque chambre à plasma 7.

De plus, l'enceinte 8 est traversée par N fibres optiques d'acquisition 13 des raies d'émission de ces plasmas qui communiquent respectivement avec l'intérieur des chambres 7, pour la transmission à l'unité de spectrographie 5 des spectres de raies propres à chaque chambre 7 (voir la flèche A aux figures 8, 9 et 11). Chacune des fibres d'acquisition 13 est reçue dans un orifice d'acquisition 14 formé dans la paroi latérale d'une chambre 7, et l'extrémité libre de chaque fibre 13 est coiffée d'une lentille optique 13a adaptée pour injecter la lumière émise par le plasma dans cette fibre 13.

De plus, la face interne conique (ou cylindrique) de la paroi de chaque chambre 7 située en face de l'orifice d'acquisition 14 est polie et métallisée, de sorte à former un miroir concave 15 (à la manière d'une sphère d'intégration, voir figure 9) apte à réfléchir un maximum de lumière vers la fibre d'acquisition 13.

Les autres moyens de focalisation 4, qui sont compris dans l'unité de génération et de confinement du plasma, sont par exemple destinés à mettre en oeuvre la technique « LIF » précitée, parallèlement à la technique « LIBS ». Ces moyens 4, qui constituent des moyens auxiliaires d'excitation seconde, peuvent également servir à générer le plasma dans chaque chambre 7, après l'ablation réalisée par les moyens de focalisation 3.

Ces moyens de focalisation 4 comportent à cet effet une tête laser 16 associée en aval à une tête galvanométrique 17, pour la focalisation suivant des angles variables d'un unique faisceau laser 18 d'excitation seconde à travers un trou ou fente d'excitation seconde 19 formé(e) à la fois dans l'enceinte 8 et dans la paroi latérale de chaque chambre 7 (voir figures 8 et 9). Chaque trou ou fente 19 est formé(e) à la hauteur d'expansion prévue du plasma ou bien à la hauteur d'expulsion de la matière ablatée de la biopuce 1, et à un angle « aveugle » pour la fibre d'acquisition 13 correspondante ou pour le miroir 15.

En regard de chaque trou ou fente 19 peut être disposée une lentille optique (non illustrée) faisant converger le faisceau laser 18 au niveau de formation du plasma ou de la matière éjectée (ce plasma est symbolisé par la référence P à la figure 10). Cette lentille peut éventuellement reposer sur de petits vérins magnétiques constitués par des électroaimants qui permettent de réaliser la mise au point.

Le déplacement du faisceau laser 18, d'un trou ou fente d'excitation seconde 19 à l'autre, est assuré par un jeu de miroirs montés sur moteurs galvanométriques qui forme la tête galvanométrique 17 précitée. Ce montage permet de décaler du délai souhaité l'impulsion d'excitation seconde 18 de celle du faisceau d'excitation première 10' véhiculé par chaque fibre optique 10.

Quant à l'unité de spectrographie 5, elle comporte un détecteur qui est de préférence un photomultiplicateur (« PM » en abrégé), un spectrophotomètre, une caméra « CCD », « CCD » intensifiée ou une « galette » de microcanaux, par exemple. Un filtre optique ne sélectionnant que la longueur d'onde souhaitée peut être intercalé entre chaque fibre optique d'acquisition 13 et le détecteur, pour injecter la lumière dans ce dernier. De plus, une lentille adéquate peut être collée en sortie de chaque fibre optique 13.

Ce dispositif selon les figures 6 à 11 permet de balayer toute la surface de la biopuce 1 plus rapidement qu'avec les dispositifs de l'art antérieur. Le temps d'analyse lors de ce balayage sera inversement proportionnel au nombre de faisceaux d'excitation 10' utilisés.

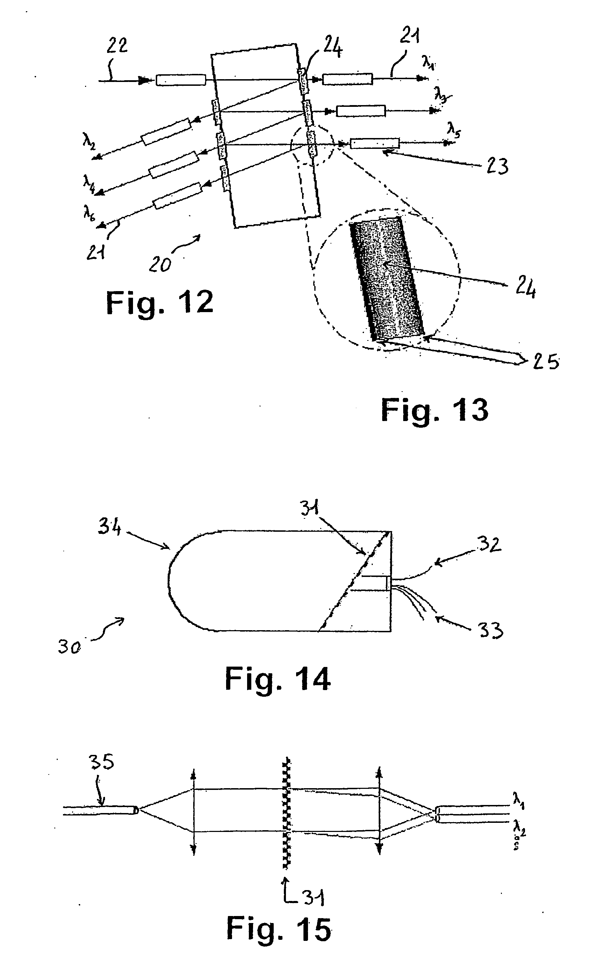

Les différents faisceaux d'excitation première 10' véhiculés par les N fibres 10 peuvent être obtenus à partir de différentes sources laser. Toutefois, une alternative consiste à utiliser une source unique produisant un faisceau constitué de la superposition de plusieurs longueurs d'onde proches les unes des autres (typiquement distantes entre elles de 0,4 nm à 1 nm), puis de décomposer le faisceau à l'aide d'un démultiplexeur en longueur d'onde (« Wavelength Division Multiplexing » ou « WDM » en abrégé), afin d'injecter chaque longueur d'onde dans une fibre 10 unique. Les figures 12 à 15 illustrent cette variante selon l'invention pour l'obtention des N faisceaux précités d'excitation première.

Plus précisément, on peut utiliser à cet effet un démultiplexeur 20 par filtrage en cascade, tel que celui illustré schématiquement à la figure 12, qui montre les N=6 faisceaux aval 21 de longueur d'ondes respectives $\lambda_1$ à $\lambda_6$ qui sont obtenus à partir du faisceau amont 22. Ces faisceaux aval 21 sont respectivement issus de collimateurs 23 qui sont chacun constitués par exemple d'une lentille à gradient d'indice. Comme illustré dans le médaillon de la figure 13, chacune des six cavités 24 que comporte le démultiplexeur 20 est entourée latéralement de réflecteurs diélectriques multicouches 25.

On notera que ce faisceau amont 22 doit être d'énergie suffisante (car tenant compte des pertes éventuelles liées au montage), de sorte que toutes les longueurs d'ondes utilisées produisent un faisceau suffisamment énergétique pour entraîner la vaporisation partielle de la surface de la biopuce 1 et la formation d'un plasma. Le cas échéant, le plasma sera produit par une seconde impulsion laser dans la matière expulsée par un autre faisceau ayant une longueur d'onde adéquate pour induire l'émission des atomes expulsés, et plus particulièrement ceux du phosphore, comme expliqué antérieurement.

En variante, on peut utiliser un multiplexeur-démultiplexeur à réseau de diffraction, tel que celui illustré aux figures 14 et 15.

Le multiplexeur-démultiplexeur 30 de la figure 14 comporte un réseau de diffraction 31 et, à son extrémité qui est opposée à celle pourvue de la fibre optique d'entrée 32 et des fibres optiques de sortie 33, un miroir de type sphérique 34 apte à réfléchir le faisceau incident pour générer les faisceaux respectivement véhiculés par les fibres de sortie 33. La figure 15 illustre quant à elle le multiplex 35 prévu en amont du système optique incorporant ce réseau de diffraction 31.

Concernant les déplacements relatifs à réaliser entre l'arrangement 6 de chambres à plasma 7 et la biopuce 1, on peut par exemple disposer cet arrangement 6 sur une structure mobile selon un axe X (voir figure 6). Les déplacements selon cet axe X sont assurés par un moteur de type pas à pas, un système d'aimants, d'électroaimants, un système galvanométrique ou toute autre système permettant d'assurer un déplacement précis selon l'axe X (dans certains cas de figure, l'axe X peut être circulaire avec un rayon constant).

La biopuce 1 à analyser se déplace quant à elle selon un axe Y perpendiculaire à la direction de l'axe X, et les mouvements sur cet axe Y sont assurés par des systèmes équivalents à ceux décrits ci-dessus pour l'axe X. Les mouvements en X et en Y sont définis par la hauteur Z selon Y et la largeur I selon X de la surface sondée à chaque impulsion laser. Si cette surface sondée à chaque impulsion n'est pas de section rectangulaire, les mouvements en X et en Y devront être réduits jusqu'à Z/2 et I/2, pour permettre d'ablater toute la surface des zones parcourues.

A chaque mouvement de la biopuce 1 selon l'axe Y, l'arrangement 6 de chambres à plasma 7 effectue K mouvements selon l'axe X, le nombre K étant défini par la distance P entre les fibres d'excitation 10 de deux chambres à plasma 7 consécutives et par la largeur I selon X de la surface ablatée à chaque impulsion laser, de telle manière que K soit égal à P/I (modulé par le facteur de la forme de l'ablation après vaporisation).

La distance P précitée entre deux fibres d'excitation 10 consécutives est définie par la largeur L de la biopuce 1 à analyser et le nombre N de fibres d'excitation 10 de l'arrangement 6, de telle manière que P soit égal à L/(N-1) si N >1.

Le même raisonnement peut être tenu pour les déplacements selon l'axe Y, si l'arrangement 6 est constitué de plusieurs lignes de chambres à plasmas 7 accolées. L'ensemble des déplacements dans les directions X et Y peuvent être assurés par une platine motorisée.

Afin de diminuer la surface à ablater pour réaliser l'analyse d'une biopuce 1, l'écartement choisi entre deux fibres d'excitation 10 consécutives est avantageusement un multiple du pas des « spots » 2 de sondes sur la biopuce 1. En effet les matrices de « spots » 2 de sondes formant les biopuces 1 selon l'invention sont telles que ces matrices sont espacées d'un pas constant sur de grandes régions de la biopuce 1 (typiquement plusieurs cm$^2$). En réalisant un arrangement 6 de chambres à plasma 7 tenant compte de ce pas, il devient possible de n'ablater que les régions sur lesquelles ont été greffées des sondes.

De même, la résolution de l'ablation et les valeurs des déplacements en X et en Y entre deux ablations sont avantageusement adaptées à la région de la biopuce 1 qui est examinée. L'ensemble des déplacements selon les axes X et Y peut être par exemple assuré par une seule platine de micro-déplacements sur laquelle est déposée la biopuce 1, les chambres à plasma 7 restant fixes.

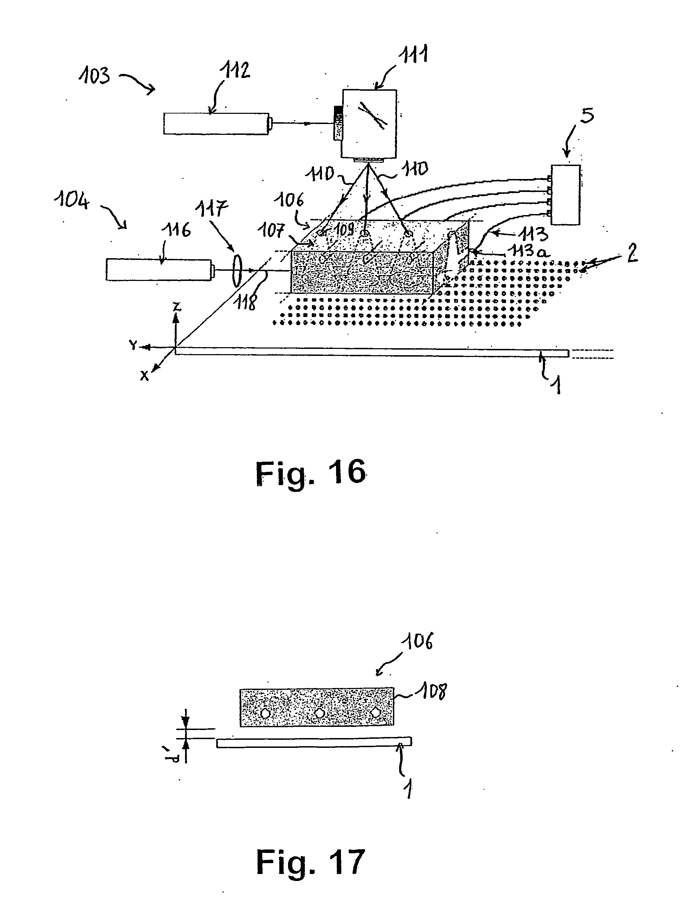

Le dispositif de mesure selon un second mode de réalisation de l'invention, qui est illustré aux figures 16 à 21, utilise également en parallèle les techniques « LIBS » et « LIF », et il se différencie essentiellement du dispositif selon le premier mode de l'invention qui vient d'être décrit en référence aux figures 6 à 11 par ce qui suit.

En premier lieu, l'arrangement 106 de chambres à plasma 107 selon ce second mode n'est pas pourvu de fibres d'excitation, du fait que ce sont les orifices d'excitation première 109 au sommet de chaque chambre à plasma 107 qui servent de points d'entrée pour un unique faisceau laser d'excitation 110 délivré par des moyens de focalisation 103. A chaque orifice 109 est avantageusement disposée une lentille optique (non illustrée) faisant converger le faisceau laser 110 à la surface de la biopuce 1 à analyser, cette lentille pouvant éventuellement reposer sur de petits vérins magnétiques constitués par des électro-aimants qui permettent de réaliser la mise au point.

Comme illustré à la figure 17, l'enceinte 108 est de préférence séparée de la biopuce 1 d'une distance d' comprise entre 50 μm et 100 μm.

Le déplacement du faisceau laser 110 d'un orifice d'excitation 109 à l'autre le long de l'arrangement 106 de chambres 107 est assuré par un jeu de miroirs montés sur des moteurs galvanométriques, formant ainsi une tête galvanométrique 111 prévue en aval d'une tête laser 112. Ce système de miroirs galvanométriques est défini de telle manière que le faisceau laser 110 soit toujours perpendiculaire à la surface de la biopuce 1, dans la zone de celle-ci à analyser. Ceci implique l'utilisation d'un miroir de longueur voisine à la somme de la longueur et de l'amplitude de déplacements de l'arrangement 106, et de deux autres miroirs de plus petite taille.

Un autre mode de réalisation de cette tête galvanométrique 111 peut consister à utiliser, en plus des deux miroirs animés d'un mouvement de rotation unique, un miroir animé non seulement d'un mouvement de rotation mais encore d'un mouvement de translation, comme illustré à la figure 16. On utilise de préférence une tête galvanométrique 111 avec un objectif télécentrique assurant un champ de travail pour lequel le faisceau d'excitation 110 reste perpendiculaire à la surface à analyser.

On notera que de nombreuses possibilités existent pour assurer la perpendicularité du faisceau d'excitation 110 à la biopuce 1, cette contrainte permettant de bien synchroniser le déplacement de l'arrangement 106 de chambres 107 et du faisceau 110, pour la reconstitution de l'image.

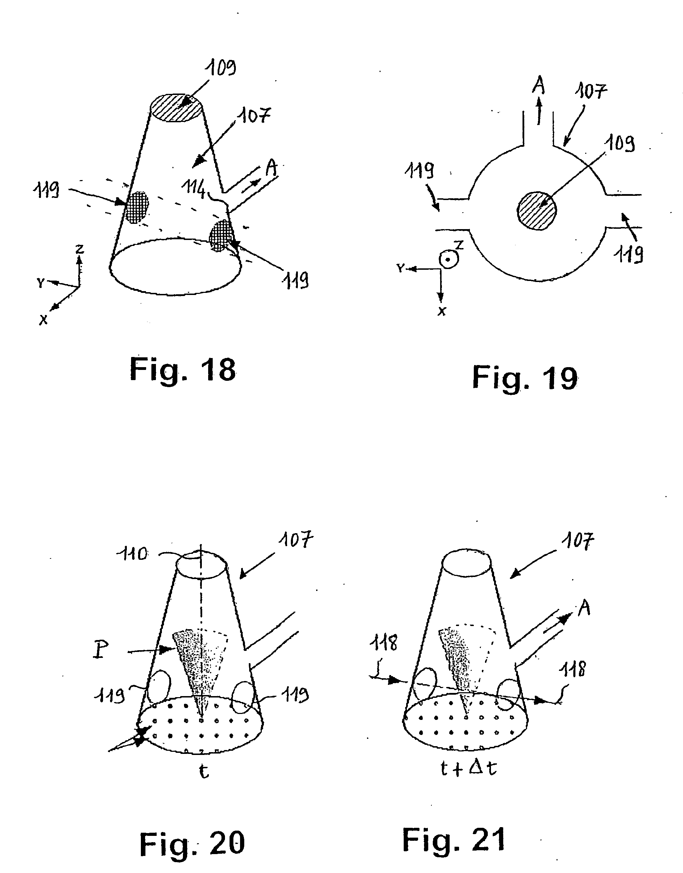

En second lieu, les moyens auxiliaires d'excitation seconde 104 comportent une tête laser 116 associée à une lentille de focalisation 117, pour l'émission seconde d'un unique faisceau laser focalisé 118 selon la technique « LIF ». A cet effet, deux trous ou fentes d'excitation seconde 119 sont prévus en vis-à-vis sur la paroi latérale (conique ou cylindrique) de chaque chambre à plasma 107, se faisant face à la hauteur d'expansion prévue du plasma ou à la hauteur d'expulsion de la matière ablatée, et toujours à un angle « aveugle » pour chacune des N fibres d'acquisition 113 (pourvues chacune d'une lentille 113a analogue à la lentille 13a à proximité de l'orifice d'acquisition 114 correspondant de la chambre 107) ou pour le miroir concave précité (voir figures 18, 20 et 21).

Comme illustré à la figure 16, l'ensemble des chambres de l'arrangement 106 est relié par une ligne droite imaginaire passant par les N paires de trous ou fentes d'excitation seconde 119 des n chambres 107.

Via ces moyens auxiliaires d'excitation seconde 104, on peut ainsi exciter l'ensemble des plasmas générés par l'unique faisceau laser 110.

**Exemple de mise en oeuvre du procédé selon l'invention et de fabrication d'une biopuce utilisée dans ce procédé :**

Il convient de noter au préalable que la fibre d'excitation 10 prévue au sommet de chaque chambre à plasma 7 du dispositif selon le premier mode de l'invention peut être doublée ou même triplée par une ou deux fibres supplémentaires pour, d'une part, permettre la capture de l'image de la surface de la biopuce 1 (en mode « RGB », i.e. rouge vert bleu) par une caméra vidéo ou un appareil photographique numérique et pour, d'autre part, assurer l'éclairage de cette surface par une lumière blanche. Ce dispositif selon l'invention permet ainsi de réaliser une image en couleur ou en noir et blanc de la surface de la biopuce 1.

De ce fait, on peut repérer la position des sondes, à condition quelles soient greffées sur des mires d'une couleur différente de celle du fond de la biopuce 1. On ne déclenchera l'ablation que lorsque la chambre à plasma 7, 107 surmontera une de ces mires. Dans cette configuration, on peut établir un code couleur, en mélangeant les trois couleurs de bases du code « RGB » sur les 3 fois 256 niveaux possibles (niveaux normalement gérés par une caméra vidéo ou par un appareil photographique numérique). Ceci fournit donc 16 777 216 couleurs possibles pour ces mires, et permet d'attribuer une mire de couleur différente à chaque « spot » 2 de cibles.

Pour réaliser ces mires de couleurs différentes, on peut utiliser des pigments d'imprimante couleur, qui ne contiennent pas de phosphore (i.e. jaune, cyan, magenta ou « CMY » en abrégé). De même, il est possible d'utiliser une imprimante de 16 millions de couleurs pour imprimer un réseau de mires de couleurs différentes sur la biopuce 1 (l'imprimante opère la conversion « RGB » en un mélange de pigments).

On greffe alors chaque « spot » 2 de cibles sur une mire de couleur unique permettant son identification univoque au moment de la lecture de la biopuce 1. En utilisant ce procédé de mires, on peut analyser une biopuce 1 dans laquelle les répartitions des « spots » de sondes sont aléatoires dans la matrice la constituant.

Pour réaliser cela, on met avantageusement en oeuvre, en combinaison selon la présente invention :

- le procédé d'analyse d'acides nucléiques en suspension qui est décrit dans la Demande de Brevet Internationale déposée le 24/02/2006 par la Demanderesse sous le n° PCT/FR2006/00428, et
- le procédé de fabrication d'un réseau organisé de sondes liées à un support par couplage magnétique à l'aide d'un vecteur de fixation, qui est décrit dans la Demande de Brevet Internationale WO-A-02/43855 au nom de la Demanderesse.

Plus précisément, on greffe chaque sonde biomoléculaire en un grand nombre de copies sur une bille magnétique ou paramagnétique d'une couleur donnée et unique. Il peut par exemple s'agir d'une bille calibrée de polystyrène contenant des particules de cobalt, de nickel ou d'un de leurs oxydes.

On peint ou l'on teinte par exemple les particules dans la masse par un mélange de pigments, comme décrit pour les mires. On mélange alors ces particules de manière stoechiométrique, de façon à obtenir un mélange stoechiométrique de sondes différentes dans lequel chacune d'entre elles est capable de s'hybrider à une séquence nucléique présente dans un mélange de cibles à analyser.

On mélange les sondes et les cibles, chaque type de sondes s'hybridant aux cibles complémentaires et les saturant. On isole, on lave puis on remet en solution les particules et les complexes sonde/cible.

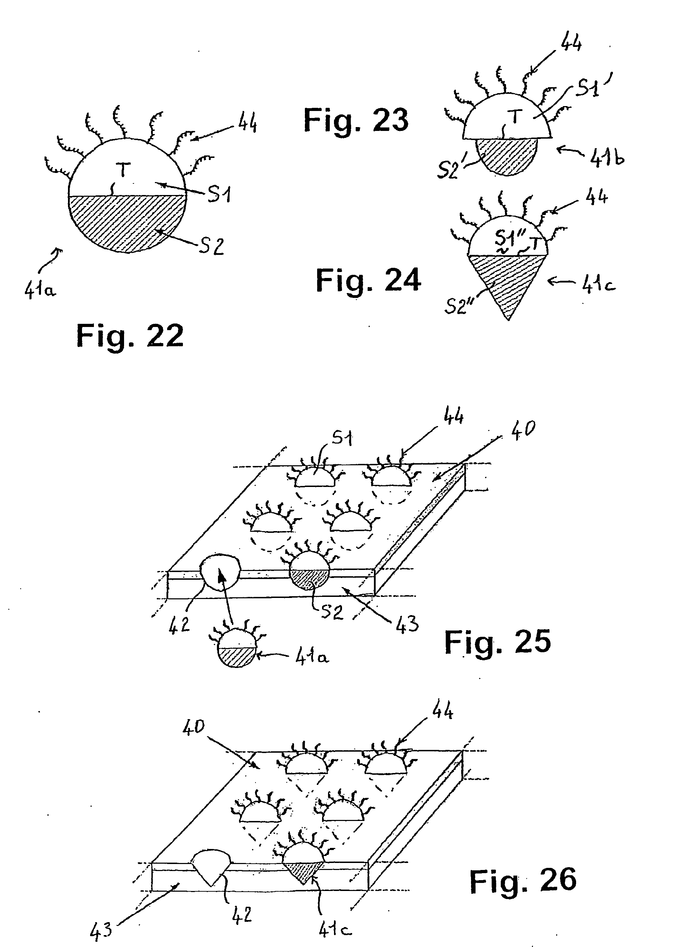

En référence aux figures 22 à 26, une feuille 40 par exemple à base d'un polyimide tel que du « Kapton », de 1 μm à 10 μm d'épaisseur (de préférence égale au diamètre de chaque bille 41 a, 41 b ou 41 c) est percée d'une multitude de trous 42 de diamètre égal à celui des billes 41a, 41b, 41c pour former une matrice de trous 42 (idéalement, il y a autant de trous 42 que de billes 41a, 41b, 41c). On dépose ou bien on colle cette feuille 40 en « Kapton » sur une lame aimantée 43 de quelques centimètres de côté (idéalement 2,5 cm x 7,6 cm). La lame 43 est avantageusement constituée d'un polymère ou d'une résine contenant des particules aimantées, et le champ magnétique généré par cette lame 43 est de l'ordre de 0,5 T à 5 T. La feuille 40 forme un écran magnétique sur ses domaines recouvrant la lame 43, alors qu'elle laisse le champ magnétique libre au niveau des trous 42.

Selon l'exemple de réalisation de la figure 22 en relation avec la figure 25, chaque bille 41 a est constituée de deux demi-sphères identiques S1 et S2 qui sont collées l'une à l'autre, via leurs tranches T (i.e. surfaces planes) respectives, dans l'un de ces trous 42 et dont seule la demi-sphère inférieure S2 tournée vers la lame aimantée 43 présente des propriétés paramagnétiques, étant par exemple réalisée en un polymère ou une résine contenant des particules paramagnétiques.

Sont également visibles aux figures 22 à 26 les sondes biologiques 44 greffées sur la surface convexe de la demi-sphère supérieure S1, qui est colorée pour former la mire précitée.

Dans la variante de la figure 23, la demi-sphère inférieure S2' présente un diamètre inférieur à celui de la demi-sphère supérieure colorée S1', sur laquelle sont greffées les sondes 44, et elle est également assemblée par collage à cette dernière et de manière centrée, via les tranches T respectives des demi-sphères S1' et S2', formant ainsi chaque bille 41 b.

Dans l'autre variante illustrée aux figures 24 et 26, chaque bille 41c est constituée d'une demi-sphère supérieure colorée S1", sur la surface convexe de laquelle sont greffées les sondes 44, un cône S2" à propriétés paramagnétiques étant collé par sa base sous la tranche T de cette demi-sphère S1" et en regard de la lame aimantée 43, à l'intérieur des trous 42.

On notera que cette géométrie asymétrique de bille 41c permet d'améliorer le rendement du procédé et en outre d'incruster plus facilement de telles billes 41 c dans les trous 42 de la feuille 40, prévus également de forme conique.

Comme indiqué précédemment, la demi-sphère supérieure S1, S1', S1" de chacune de ces billes 41 a, 41 b, 41 c est avantageusement constituée d'une matière plastique peinte ou colorée, telle que le polystyrène (ou de tout autre matériau biocompatible ne contenant pas de phosphore).

Après avoir assemblé la feuille de « Kapton » 40 sur la lame aimantée 43, on dépose les complexes billes/sondes/cibles à la surface de cette feuille 40 recouvrant cette lame 43. Puis on déplace un stylet, dont la pointe est alimentée par un champ magnétique inférieur au champ de la lame 43 (typiquement de 0,5 T à 1,5 T, via un aimant statique ou un électroaimant), au-dessus de la feuille 40, à une distance qui représente sensiblement les trois quarts du diamètre moyen des billes 41 a, 41 b, 41 c. Ces dernières sont attirées par ce stylet, et se déplacent à la surface de la feuille 40, du fait que le champ magnétique à travers la feuille 40 est plus faible que celui du stylet. Toutefois, dès que le stylet passe à proximité d'un trou 42 de la feuille 40, une bille 41 a, 41 b, 41 c est capturée par le champ magnétique, du fait que ce dernier est plus fort dans ce trou 42. En raison de la taille des trous 42 et de la concurrence des champs magnétiques, une seule bille 41 a, 41 b, 41 c sera capturée par trou 42. Une fois toutes les billes 41 a, 41 b, 41c capturées, on peut enlever la lame 43 en laissant les billes 41 a, 41 b, 41 c sur la feuille 40.

On analyse ensuite la lame magnétique 43 et/ou la feuille de « Kapton » 40 par le dispositif de mesure selon l'invention décrit ci-dessus. On détermine la couleur de chaque bille 41a, 41b, 41c grâce au système de capture d'image, ce qui permet de déterminer la nature de la sonde 44. On détermine la quantité de sondes 44 fixées sur chaque bille 41 a, 41 b, 41c par la quantification du phosphore, après ablation de matière et analyse des raies d'émission d'un plasma chaud généré par cette ablation.

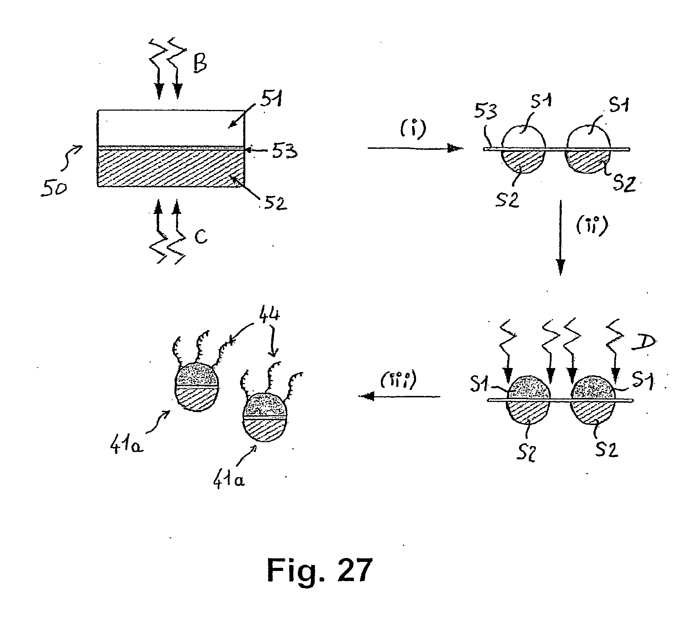

Comme illustré à la figure 27, la fabrication des billes polaires magnétiques 41 a peut. être réalisée par usinage laser (voir flèches B et C) d'une plaque 50 constituée de deux feuilles ou films 51 et 52 en matériaux différents qui sont respectivement constitués de polystyrène et d'une résine paramagnétique et qui sont collés ensemble via une couche adhésive 53. Par exemple, il est possible d'utiliser deux feuilles 51 et 52 à base d'un polymère de dénomination « Vacrel » dont seule la feuille inférieure 52 contient des nanoparticules de nickel ou de cobalt.

Lors d'une première étape (i), on obtient ainsi par cet usinage laser des paires de demi-sphères S1 et S2 collées ensemble, ces paires étant reliées entre elles via la couche adhésive 53.

Lors d'une seconde étape (ii), on procède à la coloration des demi-sphères supérieures S1, dans le cas où le matériau les constituant n'est pas déjà coloré.

Lors d'une troisième étape (iii), on procède à la séparation de ces paires de demi-sphères S1 et S2 par un nouvel usinage laser (flèches D), pour l'individualisation des billes 41a correspondantes et le greffage des sondes 44.

On polymérise ainsi les billes 41 a dans la masse des films 51 et 52, par focalisation d'un faisceau laser. La structure finale des billes 41a peut être obtenue à l'aide de caches ou d'une grille posée à la surface des films 51 et 52, pour l'obtention de chaque paire de demi-sphères S1 et S2 collées ensemble. Ces billes 41a sont libérées par digestion des parties non polymérisées des films, via de la soude.

Une autre alternative pour réaliser ces billes polaires magnétiques consiste à les fabriquer à partir de deux résines photosensibles différentes et d'un ou de deux faisceaux lasers, pour réaliser une stéréophotographie. On utilise une première résine magnétiquernent neutre pour la synthèse de la première partie (e.g. demi-sphère S1) de la bille 41a, et une deuxième résine contenant des particules paramagnétiques de cobalt ou de nickel pour la synthèse de la deuxième partie (e.g. demi-sphère S2).

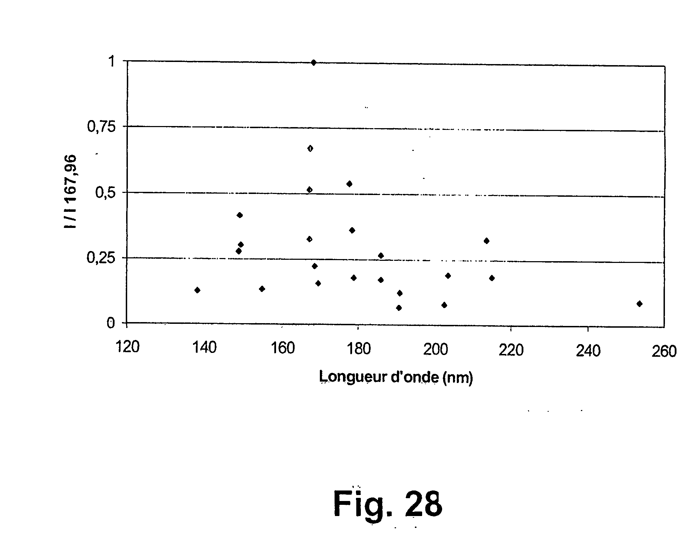

En référence à la figure 28 relatives aux raies atomiques du phosphore, cet élément a un spectre d'émission présentant des raies intenses dans l'UV et l'extrême UV. A une température de 13000 K, la raie la plus intense du phosphore se situe à 167,96 nm. Classées par ordre d'intensité relative ($I/I_{167,96}$), les 24 raies les plus intenses du phosphore, sont répertoriées dans le tableau 1 ci-dessous et à la figure 28 correspondante :

Tableau 1 :

| λ (nm) | $I/I_{167,96}$ | λ (nm) | $I/I1_{67,96}$ | λ (nm) | $I/I_{167,96}$ |
|---|---|---|---|---|---|
| 167,9697 | 1 | 167,1068 | 0,324 | 185,8901 | 0,172 |
| 167,4595 | 0,670 | 149,3009 | 0,302 | 169,4031 | 0,157 |
| 177,4949 | 0,538 | 148,8022 | 0,278 | 154,8461 | 0,135 |
| 167,2476 | 0,514 | 185,941 | 0,268 | 138,1476 | 0,125 |
| 149,1365 | 0,415 | 168,5975 | 0,224 | 190,7661 | 0,120 |
| 178,2829 | 0,360 | 203,3474 | 0,191 | 253,5612 | 0,092 |
| 167,1671 | 0,327 | 214,9142 | 0,186 | 202,348 | 0,077 |
| 213,6182 | 0,325 | 178,7648 | 0,181 | 190,5478 | 0,067 |

Notons que le calcul de l'intensité des raies se base sur la formule suivante :

$$I_{ij} = \frac{hc}{4\pi\lambda_{ij}} \frac{Ng_i A_{ij}}{Z(T_{exc})} \exp\left(-\frac{E_i}{kT_{exc}}\right)$$

avec

**h** la constante de Planck,

**c** la vitesse de la lumière,

$\lambda_{ij}$ la longueur d'onde de la transition considérée de l'état supérieur i vers l'état inférieur j,

**g$_i$** le poids statistique du niveau d'énergie de départ i de la raie d'émission,

**A$_{ij}$** la probabilité de transition pour la raie considérée,

**Z(T$_{exc}$)** la fonction de partition,

**E$_i$** l'énergie du niveau excité à partir duquel la transition a lieu,

**T$_{exc}$** la température du plasma.

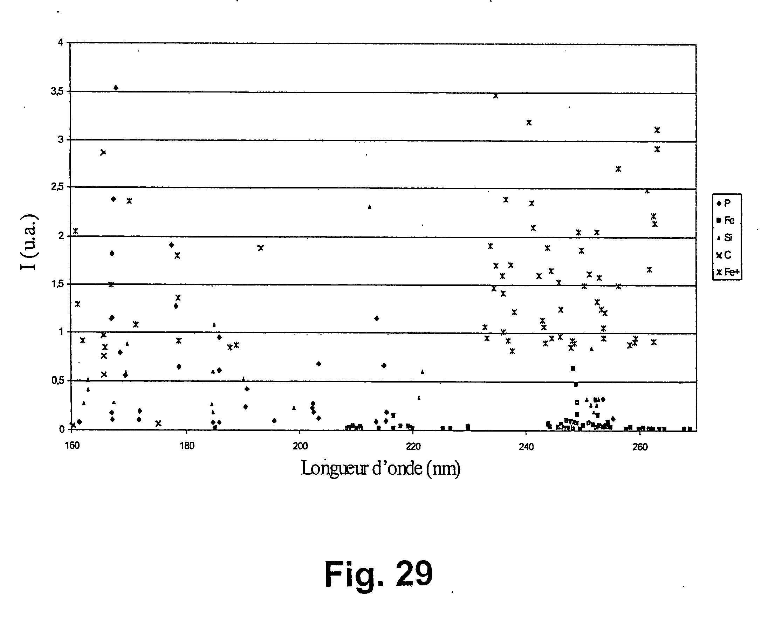

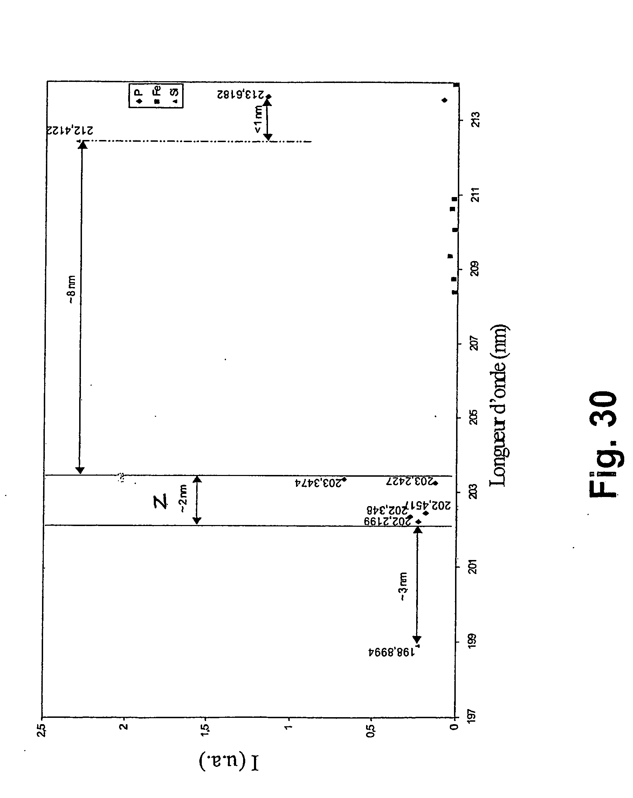

Les figures 29 et 30 rendent compte de la présence d'éléments parasites lors de l'analyse des biopuces par la technique de « LIBS », ces biopuces étant notamment à base de silicium (cas le plus répandu des biopuces à substrat en verre). Si l'on fait l'inventaire des autres éléments parasites pouvant être présents :

• dans les différentes compositions des substrats en verre : Al, C, Na, O, Ca, B, Ge, As, Fe, Ti, Ni, Zn, et/ou
• dans le squelette des acides nucléiques : C, N, O, et/ou
• dans les auto-assemblages moléculaires permettant la fixation des sondes : Au, S, O, C, N, Br,

il se trouve que seuls les trois éléments Si, Fe (Fe$^+$) et C possèdent des raies plus ou moins intenses comparées à celles du phosphore (voir figure 29) dans la plage spectrale [160 nm ; 260 nm].

Les graphes des figures 29 et 30 répertorient l'ensemble des raies les plus intenses de ces différents éléments (ainsi que celles du phosphore) dans cette plage spectrale et pour une température de 13000 K. Il en ressort qu'en choisissant préférentiellement de travailler à une longueur d'onde supérieure à 200 nm, un ensemble de raies du phosphore situées à 203 ± 3 nm apparaît comme étant particulièrement intéressant, de par le compromis atteint entre :

- le relatif « éloignement » de cet ensemble de raies par rapport aux raies parasites (présence d'une raie du silicium moins intense à 198,89 nm et d'une autre raie du silicium plus intense à 212,41 nm), étant précisé que l'utilisation d'un filtre interférentiel centré sur 203 nm et ayant une bande passante spectrale de 3-6 nm est bien appropriée dans ce cas ; et

- la possibilité de travailler non pas sur une seule raie mais sur un ensemble de raies dont l'intensité « cumulée » est supérieure (d'un facteur 4 à 5) à celle de la raie du phosphore à 253,56 nm.

On peut mentionner en variante l'utilisation selon l'invention de la raie du phosphore à 213,61 nm, qui est certes quatre fois plus intense que celle à 253,56 nm, mais qui se situe à seulement 12 Å de la raie du silicium à 212,41 nm évoquée ci-dessus.

Le graphe de la figure 30 montre notamment la zone d'étude Z préférentiellement retenue pour les raies d'émission du phosphore, de part et d'autre de 203 nm.

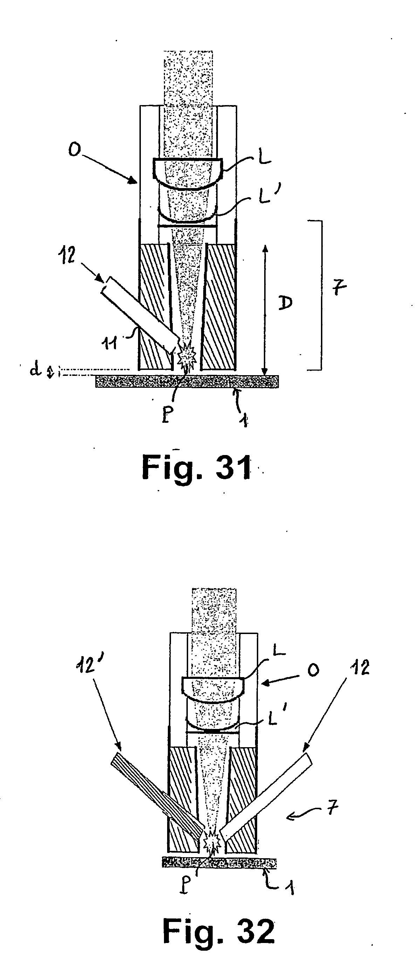

Les figures 31 et 32 illustrent des exemples de chambres à plasma 7 utilisables dans un dispositif de mesure quantitative selon l'invention, en relation avec des moyens de contrôle de l'atmosphère de la chambre et avec l'optique de focalisation correspondante.

Avec la technique « LIBS », l'obtention d'un plasma de composition optimale (i.e. permettant une analyse spectrale fine) requiert, comme mentionné précédemment, l'emploi d'une atmosphère contrôlée qui est constituée de gaz tels que l'argon, le néon ou l'azote. Chaque chambre de confinement à plasma 7, pouvant être usinée en aluminium par exemple (matériau facilement usinable et peu onéreux), est positionnée dans ces exemples entre l'optique de focalisation (comportant des lentilles L, L') et la biopuce 1 en étant fixée sur l'objectif de microscope O, comme illustré aux figures 31 à 33. Chaque chambre 7 est ainsi fixée au barillet de l'optique de focalisation. Une ouverture sur le côté de chaque chambre 7 qui est reliée à un tuyau 12 permet l'arrivée du gaz plasmogène (voir figure 8 commentée ci-dessus) à travers cette chambre 7.

Pour un diamètre de cet objectif O égal à 25 mm et une distance D de travail de 10 mm, la géométrie de chaque chambre 7 peut par exemple conduire à un confinement de l'atmosphère dans un volume inférieur à 50 mm$^3$. Un espacement d laissé entre la chambre 7 et la surface d'analyse de la biopuce 1 (d < 1 mm, de préférence) permet l'évacuation du gaz. L'optique d'acquisition envisagée peut être intégrée à la structure de chaque chambre 7, comme expliqué ci-après.

La chambre 7 selon l'invention de la figure 32 est pourvue d'une fibre optique 12' la traversant latéralement, en plus du tuyau 12 d'amenée du gaz plasmogène.

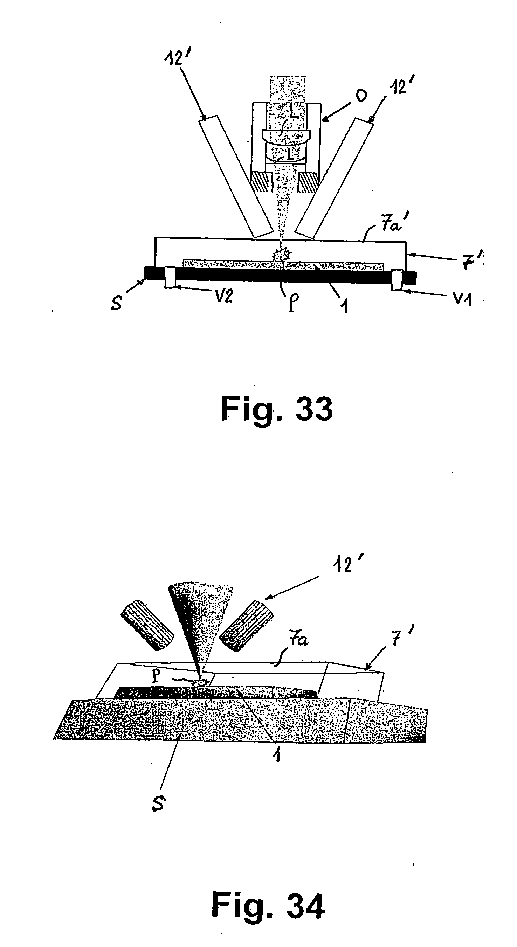

Dans le mode de réalisation selon l'invention des figures 33 et 34, on a remplacé la chambre de confinement 7 par une cellule ou chambre fermée 7' par exemple de forme parallélépipédique, dont au moins la face supérieure 7a' est réalisée en quartz ou en tout autre matériau transparent aux longueurs d'onde d'excitation et d'acquisition. La chambre 7' est équipée sur sa face inférieure de deux valves V1 et V2, respectivement de remplissage en gaz plasmogène (e.g. argon/ azote) et de purge d'air. L'air contenu dans la chambre 7' peut ainsi être extrait grâce à la valve de purge V2, puis cette chambre 7' est remplie de gaz plasmogène grâce à la valve de remplissage V1. A ces figures 33 est 34 est en outre visible un socle S de platine motorisée sur laquelle la biopuce 1 est montée mobile dans les directions X et Y de la figure 6. La face supérieure 7a' de cette cellule permet le passage des impulsions laser pour générer le plasma à la surface de la biopuce 1 et l'acquisition des raies d'émission du plasma grâce à des fibres optiques 12' disposées à proximité de cette surface. On notera que les faces latérales de la cellule 7' peuvent éventuellement être également en quartz, permettant ainsi l'excitation du plasma par un autre faisceau laser disposé sur le côté.

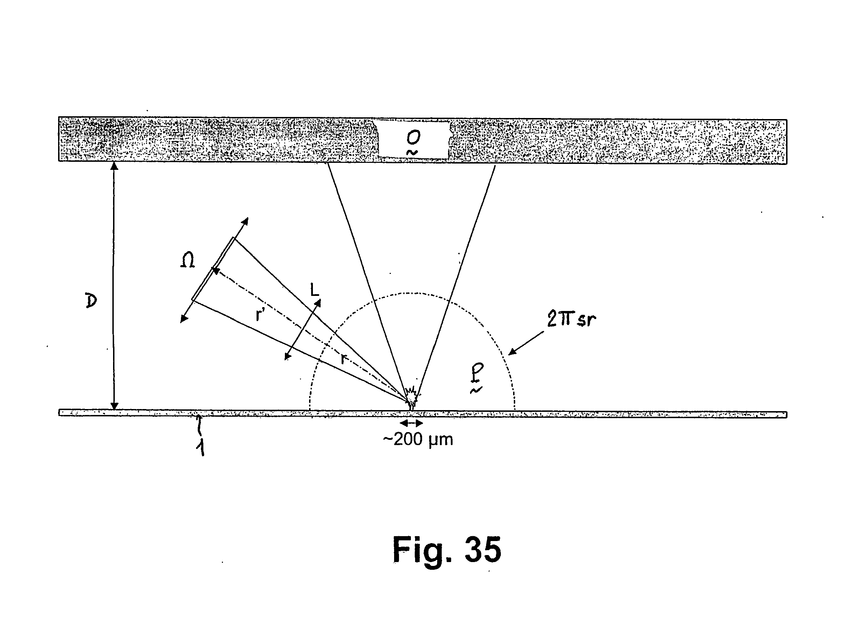

La figure 35 illustre, pour une distance D de travail entre l'objectif O du microscope et la surface d'analyse de la biopuce 1 qui est choisie inférieure à 10 mm, l'émission homogène du plasma P dans un angle solide de $2\pi$ stéradians, à partir du point central d'où est émis le rayonnement.

On notera que la longueur minimale de la ou de chaque fibre optique devra au moins être égale à la moitié du diamètre de l'objectif O, pour pouvoir positionner un détecteur. Quoiqu'il en soit, une longueur de fibre optique supérieure à 10 cm n'est pas nécessaire. En sortie des fibres optiques d'acquisition 13', au lieu d'utiliser dans le cas de la micro-sonde « LIBS » un spectromètre à l'intérieur duquel a été établie une mise sous vide plus ou moins poussée, on peut avantageusement employer un autre système d'acquisition de type à filtre interférentiel et à « CPM » (« Channel PhotoMultiplier » ou photomultiplicateur à canaux) qui est particulièrement bien adapté à une longueur d'onde $\lambda$ proche de 200 nm.

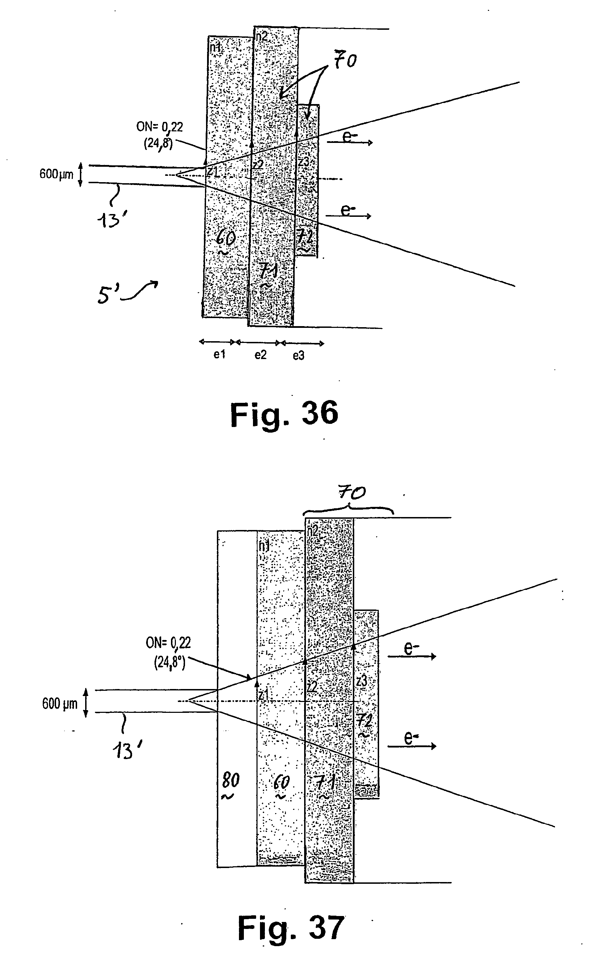

Les figures 36 et 37 illustrent les caractéristiques optiques principales de cette unité d'acquisition 5' de type à fibre optique 13' et à filtre interférentiel (référence 60 sur les figures) / « CPM » (référence 70 sur les figures). La fibre optique 13' peut par exemple être de modèle « fibre Ocean Optics » avec une ON (ouverture numérique) de 0,22 soit 24,8°, et le « CPM » 70 accolé au filtre interférentiel peut par exemple être de modèle Perkin Elmer.

Le filtre interférentiel 60 (indice de réfraction n1, épaisseur e1) se rapporte avantageusement à la longueur d'onde d'analyse du phosphore contenu dans le plasma P, pour l'une des longueurs d'onde caractéristiques du phosphore.

Le « CPM » 70 est caractérisé par une fenêtre 71 en quartz (d'indice de réfraction n2 et d'épaisseur e2) et par une photocathode « multi alkali » (d'épaisseur e3). En variante, pourrait être utilisé à la place de ce « CPM » un photomultiplicateur de type « PM » , une galette de micro-canaux ou même tout autre détecteur de photons.

Pour cette unité d'acquisition 5' est également visible à la figure 37 une couche 80 d'air, d'eau ou d'huile optique (l'air est utilisé à titre préférentiel) prévue transparente à la longueur d'onde d'acquisition choisie, en plus du filtre interférentiel 60 et du « CPM » 70.

Dans un autre mode de réalisation, on notera qu'une lentille convergente pourrait être introduite entre la fibre optique 13' et le « CPM » 70, afin d'imager la sortie de fibre sur ce « CPM » 70.

**Revendications**

1. Procédé de mesure quantitative de cibles biomoléculaires ayant été déposées sur une biopuce (1) de type à matrice de sondes (44) hybridées par lesdites cibles, ladite matrice comportant une multitude de points de mesure (2) comprenant chacun une pluralité desdites sondes, **caractérisé en ce qu'**il comprend les étapes suivantes :

   a) on focalise au moins un faisceau laser (10', 110, 18, 118) sur chaque point de mesure, pour en extraire un plasma chaud (P) et confiné comprenant un élément chimique à quantifier qui est présent dans lesdites cibles et, optionnellement, en outre dans lesdites sondes,
   b) on détecte et l'on analyse des raies lumineuses d'émission dudit plasma pour chaque point de mesure, en mesurant les intensités respectives de ces raies, puis
   c) on détermine, via un étalonnage préalable de ces raies établissant une corrélation entre les intensités des raies propres audit élément à quantifier et des concentrations données de cet élément, la concentration dans chaque point de mesure dudit élément ou d'un groupe l'incorporant au sein desdites cibles.

2. Procédé selon la revendication 1, **caractérisé en ce que** l'on déduit de l'étape c) le nombre d'atomes dudit élément dans chaque point de mesure (2), pour en déduire le nombre de sondes (44) ayant été hybridées par lesdites cibles.

3. Procédé selon la revendication 1 ou 2, **caractérisé en ce que** l'on utilise la technique de spectroscopie d'émission optique induite par laser (« LIBS ») pour la mise en oeuvre des étapes a) à c), et **en ce que** de préférence l'on utilise en parallèle la technique de fluorescence induite par laser (« LIF ») pour la mise en oeuvre des étapes a) à c).

4. Procédé selon une des revendications précédentes, **caractérisé en ce que** l'on utilise des cibles comprenant des acides nucléiques non marqués, et **en ce que** l'on utilise de préférence des sondes choisies dans le groupe constitué par les acides nucléiques, les acides nucléiques peptides (« PNA »), les acides nucléiques verrouillés (« LNA ») et les éthers ribonucléiques (« ERN »).

5. Procédé selon la revendication 4, **caractérisé en ce que** l'on utilise, à titre d'élément à quantifier, le phosphore uniquement présent dans les cibles d'acides nucléiques pour la détection dans ledit plasma (P), à l'étape b), de raies d'émission atomiques et ioniques du phosphore.

6. Procédé selon la revendication 4, **caractérisé en ce que** l'on utilise à titre d'élément à quantifier le phosphore présent à la fois dans les cibles d'acides nucléiques et dans les sondes, lesquelles comprennent également des acides nucléiques, pour la détection à l'étape b) dans ledit plasma (P), suite à une étape de différenciation préalable entre cibles et sondes, de raies d'émission atomiques et ioniques du phosphore.

7. Procédé selon la revendication 5 ou 6, **caractérisé en ce que** l'on détecte à l'étape b) les raies d'émission du phosphore à une longueur d'onde de valeur choisie dans le groupe constitué par 138 ± 3 nm, 148 ± 3 nm, 154 ± 3 nm, 167 ± 3 nm, 177 ± 3 nm, 190 ± 3 nm, 193 ± 3 nm, 203 ± 3 nm, 213 ± 3 nm et 253 ± 3 nm, et **en ce que** l'on détecte de préférence à l'étape b) les raies d'émission du phosphore à une longueur d'onde de 203 ± 3 nm.

8. Procédé selon une des revendications précédentes, **caractérisé en ce que**, antérieurement à l'étape a), l'on traité chaque cible lors d'une étape de calibration pour que sa taille soit sensiblement égale à celle de chaque sonde (44), de sorte à éliminer les parties non hybridées des cibles, et **en ce que** l'on met en oeuvre de préférence cette étape de calibration en traitant la biopuce (1) par une enzyme de type nucléase, telle qu'une exonucléase, qui est apte à dégrader tous les acides nucléiques à simple brin qui sont présents sur chaque point de mesure (2) pour ne conserver que des doubles brins sonde/ cible.

9. Procédé selon une des revendications précédentes, **caractérisé en ce que** ledit ou chaque faisceau laser (10', 110, 18, 118) utilisé à l'étape a) est émis dans la gamme infrarouge - visible - ultraviolet selon une impulsion comprise entre 1 fs et 100 ns, avec une fréquence comprise entre 10 Hz et 100 kHz et une énergie comprise entre 1 mW et 1 kW, et **en ce que** de préférence ledit ou chaque faisceau laser (10', 110, 18, 118) présente une densité de puissance à la surface de chaque point de mesure (2) qui est supérieure à 1 GW.cm$^{-2}$, pour l'obtention par vaporisation du plasma (P) de type chaud et à durée de vie d'environ 2 $\mu$s.

**10.** Procédé selon une des revendications précédentes, **caractérisé en ce que** l'on utilise un unique faisceau laser (110) qui ablate chaque point de mesure (2) selon une surface de côté compris entre 1 μm et 50 μm, et **en ce qu'**on déplace la biopuce (1) relativement par rapport au faisceau via des micro-déplacements planaires selon un pas compris entre 1 μm et 100 μm, pour balayer la totalité desdits points de mesure.

**11.** Procédé selon une des revendications 1 à 9, **caractérisé en ce que** l'on déplace simultanément plusieurs faisceaux lasers (10') en mouvement relatif par rapport à la biopuce (1), pour que ces faisceaux ablatent la totalité desdits points de mesure (2).

**12.** Procédé selon une des revendications précédentes, **caractérisé en ce que** l'on confine le plasma (P) généré par ledit ou chaque faisceau (10', 110, 18, 118) de telle sorte que ce plasma n'interfère pas avec les autres points de mesure (2) à analyser, et **en ce que** l'on détecte simultanément les raies d'émissions du plasma correspondant audit ou à chaque faisceau, et **en ce que** l'on adjoint de préférence audit ou à chaque plasma (P) confiné au moins un agent d'activation, tel que de l'argon, de l'hélium, de l'azote ou un mélange de ces gaz.

**13.** Dispositif pour la mise en oeuvre d'un procédé de mesure quantitative selon une des revendications précédentes, **caractérisé en ce qu'**il comporte :

- une biopuce (1) de type à matrice de sondes (44) hybridées par des cibles biomoléculaires, ladite matrice comportant une multitude de points de mesure (2) comprenant chacun une pluralité desdites sondes,
- une unité de génération et de confinement de plasma qui comprend des moyens de focalisation (3 et 4) d'au moins un faisceau laser (10', 110, 18, 118) sur les points de mesure pour en extraire un plasma chaud (P) contenant un élément chimique à quantifier, tel que le phosphore, qui est présent dans lesdites cibles et optionnellement en outre dans lesdites sondes, et des moyens pour confiner le ou chaque plasma ainsi extrait, et
- une unité de spectrographie (5) qui est reliée à ladite unité de génération et de confinement de plasma et qui est adaptée pour détecter et analyser des raies d'émission du plasma pour chaque point de mesure, de telle sorte que l'on détermine la concentration dans chaque point de mesure dudit élément à partir d'une corrélation entre les intensités des raies propres audit élément à quantifier et des concentrations données de cet élément.

**14.** Dispositif selon la revendication 13, **caractérisé en ce que** lesdites cibles hybridant lesdites sondes (44) comprennent des acides nucléiques non marqués, et **en ce que** lesdites sondes sont choisies dans le groupe constitué par les acides nucléiques, les acides nucléiques peptides (« PNA »), les acides nucléiques verrouillés (« LNA ») et les éthers ribonucléiques (« ERN »), et **en ce que** la taille de chaque cible est de préférence sensiblement égale à celle de chaque sonde (44), de telle sorte que toutes les cibles de chaque point de mesure (2) sont hybridées.

**15.** Dispositif selon la revendication 13 ou 14, **caractérisé en ce que** lesdits moyens pour confiner le ou chaque plasma (P) extrait comportent au moins un arrangement (6, 106) de n (n ≥ 1) chambre(s) à plasma (7, 107) délimité par une enceinte (8, 108) qui surmonte la biopuce (1) en étant ouverte sur cette dernière, ladite enceinte étant pourvue d'orifices d'excitation (9, 109) qui sont chacun destinés à recevoir un faisceau laser d'excitation (10', 110) apte à former ledit plasma et étant traversée par des fibres optiques d'acquisition (113) des raies d'émission de ces plasmas pour leur transmission à ladite unité de spectrographie (5), ledit ou chaque arrangement de chambre(s) à plasma étant en mouvement relatif par rapport à la biopuce, et **en ce que** ladite unité de génération de plasma comporte de préférence des moyens (3) pour émettre une pluralité de faisceaux lasers d'excitation (10') et pour les acheminer respectivement et de manière simultanée à l'intérieur desdites chambres à plasma (7) via lesdits orifices d'excitation (9), lesdits faisceaux laser d'excitation (10') étant de préférence respectivement issus de différentes sources lasers.

**16.** Dispositif selon la revendication 15, **caractérisé en ce que** l'orifice d'excitation (9) de chaque chambre à plasma (7) reçoit une fibre optique d'excitation (10) qui est destinée à guider le faisceau laser (10') correspondant à une longueur d'onde donnée et qui est pourvue à son extrémité libre d'une première lentille optique adaptée pour faire converger ce faisceau sur la biopuce (1), et **en ce que** de préférence lesdits faisceaux laser d'excitation (10') sont issus d'une unique source laser qui émet un faisceau amont (22) à plusieurs longueurs d'ondes superposées et distantes entre elles de 0,4 nm à 1 nm et d'un démultiplexeur (20, 30) en longueurs d'ondes pour la séparation de ce faisceau amont en des faisceaux aval (21) présentant respectivement autant de longueurs d'onde que de fibres optiques d'excitation (10) destinées à les véhiculer.

**17.** Dispositif selon la revendication 15, **caractérisé en ce que** ladite unité de génération de plasma comporte des moyens (103) pour émettre un unique faisceau laser d'excitation (110) et pour l'acheminer successivement à l'intérieur desdites chambres à plasma (107) en le déplaçant d'un orifice d'excitation (109) à un autre via une tête galvanométrique (111).

**18.** Dispositif selon une des revendications 15 à 17, **caractérisé en ce que** chaque chambre à plasma (7, 107) est délimitée par une surface latérale de révolution dont le sommet est pourvu de l'un desdits orifices d'excitation (9, 109), qui présente sur cette surface latérale un orifice d'acquisition (14, 114) recevant ladite fibre d'acquisition (13, 113) et qui débouche immédiatement au-dessus de la biopuce (1) via une ouverture inférieure de ladite chambre, de sorte à confiner le plasma (P) extrait de celle-ci par le faisceau laser (10', 110) correspondant, et **en ce que** de préférence la fibre optique d'acquisition (14, 114) de chaque chambre à plasma (7, 107) est pourvue d'une seconde lentille optique (13a, 113a) à son extrémité libre débouchant dans la chambre, la face interne de ladite surface latérale étant conçue pour former localement un miroir concave (15) apte à optimiser la réflexion des radiations lumineuses émises par ledit plasma (P) en direction de ladite fibre d'acquisition (13, 113).

**19.** Dispositif selon la revendication 18, **caractérisé en ce que** ladite unité de génération de plasma comporte également des moyens auxiliaires (4, 104) d'émission d'un faisceau laser d'excitation seconde (18, 118) et d'introduction de ce faisceau d'une chambre (7, 107) à une autre, via au moins un orifice d'excitation seconde (19, 119) formé dans la partie inférieure de la surface latérale de chaque chambre à hauteur d'expansion du plasma (P) ou d'expulsion de la matière extraite de la biopuce (1), chaque orifice d'excitation seconde étant formé à un emplacement prévu pour ne pas être affecté par ladite fibre d'acquisition (13, 113) ni par ledit miroir concave (15).

**20.** Dispositif selon la revendication 19, lorsque la revendication 18 est selon la revendication 15, **caractérisé en ce que** lesdits moyens auxiliaires d'émission (4) comportent une tête galvanométrique (17) apte à déplacer ledit faisceau d'excitation seconde (18) d'un orifice d'excitation seconde (19) à un autre, et **en ce que** chaque orifice d'excitation seconde (19) est de préférence pourvu d'une troisième lentille optique apte à faire converger le faisceau laser d'excitation seconde (18) correspondant à ladite hauteur d'expansion ou d'expulsion.

**21.** Dispositif selon la revendication 19, lorsque la revendication 18 est selon la revendication 17, **caractérisé en ce que** chaque chambre à plasma (107) présente une paire d'orifices d'excitation seconde (119) se faisant face, de telle sorte que ces paires d'orifices soient alignées au sein dudit arrangement (106) de chambres pour la focalisation à travers cet alignement d'un faisceau laser d'excitation seconde (118) émis par lesdits moyens auxiliaires d'émission (104).

**22.** Dispositif selon une des revendications 13 à 21, **caractérisé en ce que** chaque point de mesure (2) comporte une bille magnétique ou paramagnétique (41a, 41b, 41c), par exemple en polystyrène contenant des particules de cobalt, de nickel ou de leur oxyde, chaque bille présentant une couleur différente de celle du reste de la biopuce (1) et de celle des autres points de mesure, de sorte que ces billes forment des mires aptes à être identifiées de manière univoque par un système de capture d'images dont est pourvue ladite unité de spectrographie (5), et **en ce que** de préférence la biopuce (1) comporte une feuille (40) en matière plastique formant écran magnétique, par exemple en polyimide, sur laquelle sont formés autant de trous (42) que de billes (41a, 41b, 41c) et qui surmonte une lame aimantée (43) apte à générer dans ces trous un champ magnétique d'intensité comprise entre 0,5 T et 5 T.

**23.** Dispositif selon la revendication 22, **caractérisé en ce que** chaque bille (41a, 41b) est constituée de deux demi-sphères (S1 et S2 ou S1' et S2') qui sont collées l'une à l'autre dans l'un desdits trous (42) et dont seule la demi-sphère inférieure (S2 ou S2') tournée vers ladite lame aimantée (43) présente des propriétés paramagnétiques, lesdites sondes (44) étant greffées sur la surface convexe de la demi-sphère supérieure (S1 ou S1') qui est colorée pour former ladite mire.

**24.** Dispositif selon la revendication 22, **caractérisé en ce que** chaque bille (41c) est constituée d'une demi-sphère supérieure (S1") colorée qui est destinée à former ladite mire et sur la surface convexe de laquelle sont greffées lesdites sondes (44), un cône (S2") présentant des propriétés paramagnétiques étant collé par sa base sous la tranche (T) de cette demi-sphère et du côté de ladite lame aimantée (43), à l'intérieur desdits trous (42).

**25.** Dispositif selon une des revendications 18 à 24, **caractérisé en ce que** ladite surface latérale de chaque chambre à plasma (7, 107) est cylindrique ou conique en divergeant vers la biopuce (1), de hauteur comprise entre 2 mm et 10 mm et débouchant à une distance de la biopuce comprise entre 5 $\mu$m et 200 $\mu$m, avec un diamètre pour ladite ouverture inférieure qui est compris entre 1 mm et 5 mm.

**26.** Dispositif selon une des revendications 18 à 25, **caractérisé en ce que** chaque chambre à plasma (7, 107) est pourvue en outre d'un orifice d'injection gazeuse (11) qui est formé sur ladite surface latérale à proximité immédiate dudit orifice d'excitation (9, 109) et qui reçoit un conduit (12) destiné à introduire un gaz inerte, tel que de l'argon ou de l'hélium, apte à appauvrir la chambre en oxygène et à activer ledit plasma (P) lors de sa formation.

27. Dispositif selon une des revendications 15 à 26, **caractérisé en ce que** ledit arrangement (6) de chambres à plasma (7) et la biopuce (1) sont respectivement montés mobiles selon deux axes X et Y orthogonaux, de telle manière qu'à chaque mouvement de la biopuce selon l'axe Y ledit arrangement effectue K mouvements selon l'axe X, où :

- K est défini par le rapport P/I de la distance P entre les fibres d'excitation (10) respectives de deux chambres adjacentes et de la largeur I selon l'axe X de la surface ablatée à chaque impulsion laser, ce rapport étant modulé par le facteur de la forme de l'ablation après vaporisation, et où
- la distance P entre ces deux fibres d'excitation est définie par l'équation P = L/(N-1) avec N >1, L étant la largeur de la biopuce et N le nombre de fibres d'excitation dans ledit arrangement, et
**en ce que** la distance P entre deux fibres d'excitation (10) adjacentes est de préférence un multiple du pas entre deux points de mesure (2) sur la biopuce (1).

28. Dispositif selon une des revendications 15 à 27, **caractérisé en ce que** ladite enceinte (8, 108) est pourvue d'au moins un solénoïde adapté pour y générer un champ magnétique, notamment de sorte à augmenter la durée de vie du ou de chaque plasma (P) et/ou à contrôler sa forme.

29. Dispositif selon une des revendications 15 à 28, **caractérisé en ce qu'**il est pourvu de moyens pour générer un champ électrique, qui sont par exemple constitués d'un matériau électriquement conducteur pour le support de la biopuce ou bien d'une électrode portée par ce support de biopuce à laquelle est associée une autre électrode portée par ladite enceinte pour générer une différence de potentiel.

30. Dispositif selon une des revendications 15 à 29, **caractérisé en ce que** ladite enceinte (8, 108) présente une géométrie sensiblement parallélépipédique qui est adaptée pour entourer au moins une ligne de plusieurs chambres à plasma (7, 107), et qui est formée par une technique de structuration mécanique ou au laser à partir d'une poudre ou d'un polymère liquide, telle que la stéréolithographie, le laminage, le frittage ou la photolithographie.

31. Dispositif selon une des revendications 13 à 30, **caractérisé en ce que** ladite unité de spectrographie (5) comprend au moins un spectrographe de type photomultiplicateur, et **en ce qu'**un filtre optique transparent uniquement à la longueur d'onde souhaitée est agencé entre chaque fibre optique d'acquisition (13, 113) et ledit spectrographe.

32. Dispositif selon la revendication 15, **caractérisé en ce qu'**il comporte une unique chambre à plasma (7') constituée d'une enceinte close contenant ladite biopuce (1), dont au moins la face supérieure (7a') est réalisée en quartz ou en tout autre matériau transparent aux longueurs d'onde d'excitation et d'acquisition, cette chambre close étant équipée de valves de remplissage (V1) en gaz plasmogène, tel que de l'argon ou de l'azote, et de purge d'air (V2).

## Claims

1. A method for the quantitative measurement of biomolecular targets that have been deposited on a biochip (1) of the type with a matrix of probes (44) hybridized by said targets, said matrix comprising a multitude of measurement points (2) each comprising a plurality of said probes, **characterized in that** it comprises the following steps:

a) at least one laser beam (10', 110, 18, 118) is focused onto each measurement point, in order to extract therefrom a hot confined plasma (P) comprising a chemical element to be quantified that is present in said targets and, optionally, also in said probes,
b) light emission lines from said plasma are detected and analyzed for each measurement point, by measuring the respective intensities of these lines, and then
c) the concentration in each measurement point of said element or of a group incorporating it within said targets is determined via a prior calibration of these lines establishing a correlation between the intensities of the lines specific to said element to be quantified and given concentrations of this element.

2. The method as claimed in claim 1, **characterized in that** the number of atoms of said element in each measurement point (2) is deduced from step c), in order to deduce therefrom the number of probes (44) that have been hybridized by said targets.

3. The method as claimed in claim 1 or 2, **characterized in that** the laser induced breakdown spectroscopy (LIBS) technique is used for implementing steps a) to c), and preferably **in that** the laser induced fluorescence (LIF) technique is used in parallel for implementing steps a) to c).

4. The method as claimed in one of the preceding claims, **characterized in that** targets comprising unlabeled nucleic acids are used, and preferably in that use is made of probes chosen from the group consisting of nucleic acids, peptide nucleic acids (PNAs), locked nucleic acids (LNAs) and ribonucleic ethers (ERNs).

5. The method as claimed in claim 4, **characterized in that** solely the phosphorus present in the nucleic acid targets is used as element to be quantified for the detection in said plasma (P), in step b), of atomic and ionic emission lines from phosphorus.

6. The method as claimed in claim 4, **characterized in that** the phosphorus present both in the nucleic acid targets and in the probes, which also comprise nucleic acids, is used as element to be quantified for the detection, in step b), in said plasma (P), following a prior step of differentiation between targets and probes, of atomic and ionic emission lines from phosphorus.

7. The method as claimed in claim 5 or 6, **characterized in that** the emission lines from phosphorus are detected, in step b), at a wavelength with a value chosen from the group consisting of $138 \pm 3$ nm, $148 \pm 3$ nm, $154 \pm 3$ nm, $167 \pm 3$ nm, $177 \pm 3$ nm, $190 \pm 3$ nm, $193 \pm 3$ nm, $203 \pm 3$ nm, $213 \pm 3$ nm and $253 \pm 3$ nm, and **in that** the emission lines from phosphorus are preferably detected, in step b), at a wavelength of $203 \pm 3$ nm.

8. The method as claimed in one of the preceding claims, **characterized in that**, prior to step a), each target is treated in a calibration step so that its size is substantially equal to that of each probe (44), so as to remove the nonhybridized parts of the targets, and **in that** this calibration step is preferably implemented by treating the biochip (1) with an enzyme of nuclease type, such as an exonuclease, which is capable of degrading all the single-stranded nucleic acids which are present on each measurement point (2) so as to preserve only probe/target double strands.

9. The method as claimed in one of the preceding claims, **characterized in that** said or each laser beam (10', 110, 18, 118) used in step a) is emitted in the infrared-visible-ultraviolet range according to a pulse of between 1 fs and 100ns, with a frequency of between 10 Hz and 100 kHz and an energy of between 1 mW and 1 kW, and preferably in that said or each laser beam (10', 110, 18, 118) has a power density at the surface of each measurement point (2) which is greater than 1 GW.cm$^{-2}$, for obtaining, by vaporization, the hot plasma (P) with a lifetime of approximately 2 $\mu$s.

10. The method as claimed in one of the preceding claims, **characterized in that** a single laser beam (110) which ablates each measurement point (2) according to a 1 $\mu$m- to 50 $\mu$m-sided surface is used, and **in that** the biochip (1) is moved relatively with respect to the beam via planar micromovements according to a step of between 1 $\mu$m and 100 $\mu$m, so as to scan all said measurement points.

11. The method as claimed in one of claims 1 to 9, **characterized in that** several laser beams (10') are simultaneously moved relatively with respect to the biochip (1), so that these beams ablate all said measurement points (2).

12. The method as claimed in one of the preceding claims, **characterized in that** the plasma (P) generated by said or each beam (10', 110, 18, 118) is confined in such a way that this plasma does not interfere with the other measurement points (2) to be analyzed, and **in that** the emission lines from the plasma corresponding to said or to each beam are simultaneously detected, and preferably in that at least one activating agent, such as argon, helium, nitrogen or a mixture of these gases, is added to said or to each confined plasma (P).

13. A device for implementing a method for quantitative measurement as claimed in one of the preceding claims, **characterized in that** it comprises:

- a biochip (1) of the type with a matrix of probes (44) hybridized by biomolecular targets, said matrix comprising a multitude of measurement points (2) each comprising a plurality of said probes,
- a plasma generating and confining unit which comprises means for focusing (3 and 4) at least one laser beam (10', 110, 18, 118) onto the measurement points in order to extract therefrom a hot plasma (P) containing a chemical element to be quantified, such as phosphorus, that is present in said targets and, optionally, also in said probes, and means for confining the or each plasma thus extracted, and

- a spectrography unit (5) which is connected to said plasma generating and confining unit and which is suitable for detecting and analyzing emission lines from the plasma for each measurement point, in such a way that the concentration in each measurement point of said element is determined on the basis of a correlation between the intensities of the lines specific to said element to be quantified and given concentrations of this element.

14. The device as claimed in claim 13, **characterized in that** said targets that hybridize said probes (44) comprise unlabeled nucleic acids, and **in that** said probes are chosen from the group consisting of nucleic acids, peptide nucleic acids (PNAs), locked nucleic acids (LNAs) and ribonucleic ethers (ERNs), and preferably **in that** the size of each target is substantially equal to that of each probe (44), such that all the targets of each measurement point (2) are hybridized.

15. The device as claimed in claim 13 or 14, **characterized in that** said means for confining the or each plasma (P) extracted comprise at least one arrangement (6, 106) of n (n ≥1) plasma chamber(s) (7, 107) delimited by an enclosure (8, 108) which surmounts the biochip (1) while being open over the latter, said enclosure being provided with excitation orifices (9, 109) which are each intended to receive an excitation laser beam (10', 110) capable of forming said plasma and having optical fibers for acquisition (113) of the emission lines from these plasmas passing through it, for transmission thereof to said spectrography unit (5), said or each arrangement of plasma chamber(s) moving relatively with respect to the biochip, and preferably **in that** said plasma generating unit comprises means (3) for emitting a plurality of excitation laser beams (10') and for conveying them, respectively and simultaneously, inside said plasma chambers (7) via said excitation orifices (9), said excitation laser beams (10') being preferably respectively derived from various laser sources.

16. The device as claimed in claim 15, **characterized in that** the excitation orifice (9) of each plasma chamber (7) receives an excitation optical fiber (10) which is intended to guide the laser beam (10') corresponding to a given wavelength and which is provided, at its free end, with a first optical lens suitable for causing this beam to converge onto the biochip (1), and preferably **in that** said excitation laser beams (10') are derived from a single laser source which emits an upstream beam (22) comprising several wavelengths which are superimposed and 0.4 nm to 1 nm apart from one another, and a wavelength demultiplexer (20, 30) for separating this upstream beam into downstream beams (21) having, respectively, as many wavelengths as there are excitation optical fibers (10) intended to carry them.

17. The device as claimed in claim 15, **characterized in that** said plasma generating unit comprises means (103) for emitting a single excitation laser beam (110) and for conveying it successively inside said plasma chambers (107) by moving it from one excitation orifice (109) to another via a galvanometer head (111).

18. The device as claimed in one of claims 15 to 17, **characterized in that** each plasma chamber (7, 107) is delimited by a lateral surface of revolution, the top of which is provided with one of said excitation orifices (9, 109), which has on this lateral surface an acquisition orifice (14, 114) receiving said acquisition fiber (13, 113) and which opens out immediately above the biochip (1) via a lower opening of said chamber, so as to confine the plasma (P) extracted therefrom by the corresponding laser beam (10', 110), and preferably **in that** the acquisition optical fiber (14, 114) of each plasma chamber (7, 107) is provided with a second optical lens (13a, 113a) at its free end emerging in the chamber, and **in that** the internal face of said lateral surface is designed so as to locally form a concave mirror (15) capable of optimizing the reflection of the light radiations emitted by said plasma (P) in the direction of said acquisition fiber (13, 113).

19. The device as claimed in claim 18, **characterized in that** said plasma generating unit also comprises auxiliary means (4, 104) for emitting a second-excitation laser beam (18, 118) and for introducing this beam from one chamber (7, 107) to another, via at least one second-excitation orifice (19, 119) made in the lower part of the lateral surface of each chamber at the height of expansion of the plasma (P) or of expulsion of the material extracted from the biochip (1), each second-excitation orifice being made at a position planned so as not to be affected by said acquisition fiber (13, 113) or by said concave mirror (15).

20. The device as claimed in claim 19, when claim 18 is as claimed in claim 15, **characterized in that** said auxiliary emission means (4) comprise a galvanometer head (17) capable of moving said second-excitation beam (18) from one second-excitation orifice (19) to another, and preferably **in that** each second-excitation orifice (19) is provided with a third optical lens capable of causing the corresponding second-excitation laser beam (18) to converge at said expansion or expulsion height.

21. The device as claimed in claim 19, when claim 18 is as claimed in claim 17, **characterized in that** each plasma chamber (107) has a pair of second-excitation orifices (119) facing one another, such that these pairs of orifices are aligned within said arrangement (106) of chambers for focusing, through this alignment, a second-excitation laser beam (118) emitted by said auxiliary emission means (104).

22. The device as claimed in one of claims 13 to 21, **characterized in that** each measurement point (2) comprises a magnetic or paramagnetic bead (41a, 41b, 41c), for example made of polystyrene containing particles of cobalt, of nickel or of the oxide thereof, each bead having a color different than that of the rest of the biochip (1) and than that of the other measurement points, such that these beads form optical test objects capable of being identified unequivocally by an image capture system with which said spectrography unit. (5) is equipped, and preferably **in that** the biochip (1) comprises a plastic sheet (40) forming a magnetic screen, for example made of polyimide, on which are made as many holes (42) as there are beads (41a, 41b, 41c), and which surmounts a magnetic strip (43) capable of generating, in these holes, a magnetic field with an intensity of between 0.5 T and 5 T.

23. The device as claimed in claim 22, **characterized in that** each bead (41a, 41b) is constituted of two half-spheres (S1 and S2 or S1' and S2') which are bonded to one another in one of said holes (42) and of which only the lower half-sphere (S2 or S2') turned toward said magnetic strip (43) has paramagnetic properties, said probes (44) being grafted onto the convex surface of the upper half-sphere (S1 or S1') which is colored so as to form said optical test object.

24. The device as claimed in claim 22, **characterized in that** each bead (41c) is constituted of a colored upper half-sphere (S1") which is intended to form said optical test object and onto the convex surface of which said probes are grafted (44), a cone (S2") having paramagnetic properties being bonded via its base under the edge (T) of this half-sphere and on the side of said magnetic strip (43), inside said holes (42).

25. The device as claimed in one of claims 18 to 24, **characterized in that** said lateral surface of each plasma chamber (7, 107) is cylindrical or conical, becoming wider toward the biochip (1), between 2 mm and 10 mm in height and opens out at a distance from the biochip of between 5 $\mu$m and 200 $\mu$m, with a diameter for said lower opening which is between 1 mm and 5 mm.

26. The device as claimed in one of claims 18 to 25, **characterized in that** each plasma chamber (7, 107) is provided, in addition, with a gas injection orifice (11) which is made on said lateral surface in immediate proximity to said excitation orifice (9, 109) and which receives a pipe (12) intended to introduce an inert gas, such as argon or helium, capable of depleting the chamber of oxygen and of activating said plasma (P) at the time it is formed.

27. The device as claimed in one of claims 15 to 26, **characterized in that** said arrangement (6) of plasma chambers (7) and the biochip (1) are respectively mounted so that they can move along two orthogonal axes X and Y, in such a way that, with each movement of the biochip along the Y-axis, said arrangement makes K movements along the X-axis, where:

- K is defined by the ratio P/l of the distance P between the respective excitation fibers (10) of two adjacent chambers and of the width 1 along the X-axis of the surface ablated at each laser pulse, this ratio being modulated by the shape factor of the ablation after vaporization, and where
- the distance P between these two excitation fibers is defined by the equation P = L/(N-1) with N > 1, L being the width of the biochip and N the number of excitation fibers in said arrangement, and preferably **in that** the distance P between two adjacent excitation fibers (10) is a multiple of the step between two measurement points (2) on the biochip (1).

28. The device as claimed in one of claims 15 to 27, **characterized in that** said enclosure (8, 108) is provided with at least one solenoid suitable for generating therein a magnetic field, in particular so as to increase the lifetime of the or of each plasma (P) and/or to control the shape thereof.

29. The device as claimed in one of claims 15 to 28, **characterized in that** it is provided with means for generating an electric field, which are, for example, constituted of an electrically conducting material for the support of the biochip or else of an electrode carried by this biochip support, with which is associated another electrode carried by said enclosure in order to generate a potential difference.

30. The device as claimed in one of claims 15 to 29, **characterized in that** said enclosure (8, 108) has a substantially parallelepipedal geometry which is suitable for surrounding at least one line of several plasma chambers (7, 107), and which is formed by a laser or mechanical structuring technique using a powder or a liquid polymer, such as stereolithography, lamination, sintering or photolithography.

**31.** The device as claimed in one of claims 13 to 30, **characterized in that** said spectrography unit (5) comprises at least one spectrograph of photomultiplied type, and **in that** an optical filter transparent only to the desired wavelength is placed between each acquisition optical fiber (13, 113) and said spectrograph.

**32.** The device as claimed in claim 15, **characterized in that** it comprises a single plasma chamber (7') constituted of a closed enclosure containing said biochip (1), at least the upper face (7a') of which is made of quartz or of any other material transparent to the excitation and acquisition wavelengths, this closed chamber being equipped with valves for filling (V1) with plasmagenic gas, such as argon or nitrogen, and for flushing of air (V2).

**Patentansprüche**

**1.** Verfahren zur quantitativen Messung von biomolekularen Zielen, welche auf einem Biochip (1) vom Typ mit einer Matrix von durch die Ziele hybridisierten Sonden (44) deponiert wurden, wobei die Matrix eine Vielzahl von Messpunkten (2) umfasst, welche jeweils eine Vielzahl der Sonden aufweisen, **dadurch gekennzeichnet, dass** es die folgenden Schritte umfasst:

a) es wird wenigstens ein Laserstrahl (10', 110, 18, 118) auf jedem Messpunkt fokussiert, um so ein heißes und eingegrenztes Plasma (P) zu gewinnen, welches ein zu quantifizierendes chemisches Element enthält, das in den Zielen und optional außerdem in den Sonden vorhanden ist,
b) es werden Emissionslinien des Plasmas für jeden Messpunkt erfasst und analysiert, indem die jeweiligen Intensitäten dieser Linien gemessen werden, und dann
c) wird über eine vorherige Kalibrierung dieser Linien, welche eine Korrelation zwischen den Intensitäten von Eigenlinien des zu quantifizierenden Elements und gegebenen Konzentrationen dieses Elements herstellt, die Konzentration in jedem Messpunkt des Elements oder einer es enthaltenden Gruppe innerhalb der Ziele bestimmt.

**2.** Verfahren nach Anspruch 1, **dadurch gekennzeichnet, dass** aus Schritt c) die Anzahl von Atomen des Elements in jedem Messpunkt (2) abgeleitet wird, um so die Anzahl von Sonden (44) abzuleiten, welche durch die Ziele hybridisiert wurden.

**3.** Verfahren nach Anspruch 1 oder 2, **dadurch gekennzeichnet, dass** die Technik einer Spektroskopie mit laserinduzierter optischer Emission ("LIBS") für die Durchführung der Schritte a)-c) genutzt wird, und das bevorzugt parallel die Technik einer laserinduzierten Fluoreszenz ("LIF") für die Durchführung der Schritte a)-c) genutzt wird.

**4.** Verfahren nach einem der vorhergehenden Ansprüche, **dadurch gekennzeichnet, dass** Ziele genutzt werden, welche nicht markierte Nukleinsäuren enthalten, und dass bevorzugt Sonden genutzt werden, welche aus der Gruppe ausgewählt sind, welche gebildet ist durch Nukleinsäuren, Peptidnukleinsäuren ("PNA"), verschlossene Nukleinsäuren ("LNA") und Ribonukleinether ("ERN").

**5.** Verfahren nach Anspruch 4, dadurch gekenntzeichnet, dass als zu quantifizierendes Element Phosphor, welcher einzig in den Zielen mit Nukleinsäuren vorhanden ist, bei dem Schritt b) für die Erfassung von atomaren und ionischen Emissionslinien des Phosphors in dem Plasma (P) genutzt wird.

**6.** Verfahren nach Anspruch 4, **dadurch gekennzeichnet, dass** als zu quantifizierendes Element der Phosphor, welcher sowohl in den Zielen mit Nukleinsäuren und in den Sonden vorhanden ist, welche ebenfalls Nukleinsäuren enthalten, bei dem Schritt b) im Anschluss an einen Vorabdifferenzierungsschritt zwischen Zielen und Sonden für die Erfassung in dem Plasma (P), von atomaren und ionischen Emissionslinien des Phosphors genutzt wird.

**7.** Verfahren nach Anspruch 5 oder 6, **dadurch gekennzeichnet, dass** bei dem Schritt b) die Emissionslinien des Phosphors bei einer Wellenlänge mit einem Wert erfasst werden, welcher ausgewählt ist aus der Gruppe, die gebildet ist durch 138 ± 3 nm, 148 ± 3nm, 154 ± 3nm, 167 ± 3nm, 177 ± 3nm, 190 ± 3nm, 193 ± 3nm, 203 ± 3nm, 213 ± 3nm und 253 ± 3nm, und dass bevorzugt bei dem Schritt b) die Emissionslinien des Phosphors bei einer Wellenlänge von 203 ± 3nm erfasst werden.

8. Verfahren nach einem der vorhergehenden Ansprüche, **dadurch gekennzeichnet, dass** vor dem Schritt a) jedes Ziel in einem Kalibrierungsschritt behandelt wird, sodass seine Größe im Wesentlichen gleich zu derjenigen der jeweiligen Sonde (44) ist, sodass nicht hybridisierte Abschnitte der Ziele eliminiert werden, und dass dieser Kalibrierungsschritt bevorzugt durchgeführt wird, indem der Biochip (1) mit einem Enzym vom Nukleasetyp behandelt wird, wie z.B. einer Exonuklease, welches dazu geeignet ist, alle Einzelstrangnukleinsäuren, welche in jedem Messpunkt (2) vorhanden sind, abzubauen, um nur die Sonden/Ziele mit Doppelsträngen beizubehalten.

9. Verfahren nach einem der vorhergehenden Ansprüche, **dadurch gekennzeichnet, dass** der oder jeder Laserstrahl (10', 110, 18, 118), welcher bei dem Schritt a) genutzt wird, in dem Infrarot-Sichtbar-Ultraviolett-Bereich mit Pulsen, welche zwischen 1 fs und 100 ns enthalten sind, mit einer Frequenz, welche zwischen 10 Hz und 100 kHz enthalten ist, und einer Energie, welche zwischen 1 mW und 1 kW enthalten ist, emittiert wird, und dass bevorzugt der oder jeder Laserstrahl (10', 110, 18, 118) eine Leistungsdichte auf der Oberfläche jedes Messpunkts (2) aufweist, welche größer als 1 GW. cm$^{-2}$ ist, um durch Verdampfung das Plasma (P) vom heißen Typ und mit Lebensdauer von ungefähr 2 $\mu$s zu erhalten.

10. Verfahren nach einem der vorhergehenden Ansprüche, **dadurch gekennzeichnet, dass** ein einziger Laserstrahl (110) genutzt wird, welcher jeden Messpunkt (2) entlang einer Seitenfläche abträgt, welche zwischen 1 $\mu$m und 50 $\mu$m enthalten ist, und dass der Biochip (1) relativ im Verhältnis zu dem Strahl über planare Mikroverschiebungen gemäß einer Schrittweite verlagert wird, welche zwischen 1 $\mu$m und 100 $\mu$m enthalten ist, um die Gesamtheit der Messpunkte abzutasten.

11. Verfahren nach einem der Ansprüche 1-9, **dadurch gekennzeichnet, dass** gleichzeitig mehrere Laserstrahlen (10') durch Relativbewegung im Verhältnis zu dem Biochip (1) verlagert werden, sodass die Strahlen die Gesamtheit der Messpunkte (2) abtasten.

12. Verfahren nach einem der vorhergehenden Ansprüche, **dadurch gekennzeichnet, dass** das durch den oder jeden Strahl (10', 110, 18, 118) erzeugte Plasma (P) derart eingegrenzt wird, dass das Plasma nicht mit den anderen zu analysierenden Messpunkten (2) interferiert, und dass gleichzeitig die Emissionslinien des dem oder jedem Strahl entsprechenden Plasmas erfasst werden, und dass bevorzugt dem oder jedem eingegrenzten Plasma (P) wenigstens ein Aktivierungswirkstoff, wie z.B. Argon, Helium, Stickstoff oder eine Mischung dieser Gase, hinzugefügt wird.

13. Vorrichtung zur Durchführung eines quantitativen Messverfahrens nach einem der vorhergehenden Ansprüche, **dadurch gekennzeichnet, dass** sie unmfasst:

    - einen Biochip (1) vom Typ mit einer Matrix von Sonden (44), welche durch biomolekulare Ziele hybridisiert sind, wobei die Matrix eine Vielzahl von Messpunkten (2) umfasst, welche jeweils eine Vielzahl der Sonden aufweisen,
    - eine Einheit zur Erzeugung und Eingrenzung eines Plasmas, welche Mittel zur Fokussierung (3 und 4) wenigstens eines Laserstrahls (10', 110, 18, 118) auf den Messpunkten, um so ein heißes Plasma (P) zu gewinnen, welches ein zu quantifizierendes chemisches Element, wie z.B. Phosphor, enthält, welches in den Zielen und optional außerdem in den Sonden vorhanden ist, und Mittel zum Eingrenzen des oder jedes so gewonnenen Plasmas umfasst, und
    - eine Spektroskopieeinheit (5), welche mit der Einheit zur Erzeugung und Eingrenzung des Plasmas verbunden ist und welche dazu ausgestaltet ist, Emissionslinien des Plasmas für jeden Messpunkt zu erfassen und analysieren, sodass die Konzentration des Elements in jedem Messpunkt ausgehend von einer Korrelation zwischen den Intensitäten von Eigenlinien des zu quantifizierenden Elements und gegebenen Konzentrationen dieses Elements bestimmt wird.

14. Vorrichtung nach Anspruch 13, **dadurch gekennzeichnet, dass** die Ziele, welche die Sonden (44) hybridisieren, nicht markierte Nukleinsäuren umfassen, und dass die Sonden ausgewählt sind aus der Gruppe, welche gebildet ist durch Nukleinsäuren, Peptidnukleinsäuren ("PNA"), verschlossene Nukleinsäuren ("LNA") und Ribonukleinether ("ERN"), und dass die Größe jedes Ziels bevorzugt gleich derjenigen der jeweiligen Sonde (44) ist, sodass alle Ziele des jeweiligen Messpunkts (2) hybridisiert sind.

15. Vorrichtung nach Anspruch 13 oder 14, **dadurch gekennzeichnet, dass** die Mittel zum Eingrenzen des oder jedes gewonnenen Plasmas (P) wenigstens eine Anordnung (6, 106) von n (n ≥ 1) Plasmakammer(n) (7, 107) umfasst, welche begrenzt ist durch einen Einschluss (8, 108), welcher den Biochip (1) überragt und über dem letzteren offen ist, wobei der Einschluss mit Anregungsöffnungen (9, 109) versehen ist, welche jeweils dazu bestimmt sind, einen Anregungslaserstrahl (10', 110) aufzunehmen, welcher dazu geeignet ist, das Plasma auszubilden, und durch optische Fasern (113) zur Aufnahme von Emissionslinien dieser Plasmen für ihre Übertragung an die Spektroskopieeinheit (5) durchlaufen sind, wobei die oder jede Anordnung von Plasmakammer(n) in relativer Bewegung im Verhältnis zu dem Biochip ist, und dass die Einheit zur Erzeugung des Plasmas bevorzugt Mittel (3) aufweist, um eine Vielzahl von Anregungslaserstrahlen (10') zu emittieren und um sie jeweils und auf gleichzeitige Weise über die Anregungsöffnungen (9) in das Innere der Plasmakammern (7) zu befördern, wobei die Anregungslaserstrahlen (10') bevorzugt jeweils aus unterschiedlichen Laserquellen hervorgehen.

16. Vorrichtung nach Anspruch 15, **dadurch gekennzeichnet, dass** die Anregungsöffnung (9) jeder Plasmakammer (7) eine optische Anregungsfaser (10) aufnimmt, welche dazu bestimmt ist, den einer gegebenen Wellenlänge entsprechenden Laserstrahl (10') zu führen und an ihrem freien Ende mit einer ersten optischen Linse versehen ist, um diesen Strahl auf den Biochip (1) zusammenlaufen zu lassen, und dass bevorzugt die Anregungslaserstrahlen (10') hervorgehen aus einer einzigen Laserquelle, welche einen vorgelagerten Strahl (22) mit vielen überlagerten und untereinander um 0,4 nm bis 1 nm beabstandeten Wellenlängen emittiert, und aus einem Wellenlängendemultiplexer (20, 30) für die Trennung dieses vorgelagerten Strahls in nachgelagerte Strahlen (21), welche jeweils so viele Wellenlängen aufweisen wie die optischen Anregungsfasern (10), die dazu bestimmt sind, sie zu befördern.

17. Vorrichtung nach Anspruch 15, **dadurch gekennzeichnet, dass** die Einheit zur Erzeugung des Plasmas Mittel (103) umfasst, um einen einzigen Anregungslaserstrahl (110) zu emittieren und um ihn anschließend in das Innere der Plasmakammern (107) zu befördern, wobei er über einen galvanometrischen Kopf (111) von einer Anregungsöffnung (109) zu einer anderen verlagert wird.

18. Vorrichtung nach einem der Ansprüche 15-17, **dadurch gekennzeichnet, dass** jede Plasmakammer (7, 107) durch eine seitliche Rotationsfläche begrenzt ist, deren Scheitel mit einer der Anregungsöffnungen (9, 109) versehen ist, welche auf dieser Seitenfläche eine Aufnahmeöffnung (14, 114) aufweist, welche die Aufnahmefaser (13, 113) aufnimmt und über eine untere Öffnung der Kammer unmittelbar über dem Biochip (1) mündet, sodass das gewonnene Plasma (P) derselben durch den entsprechenden Laserstrahl (10', 110) eingegrenzt wird, und dass bevorzugt die optische Aufnahmefaser (14, 114) jeder Plasmakammer (7, 107) mit einer zweiten optischen Linse (13a, 113a) an ihrem freien Ende versehen ist, welches in der Kammer mündet, wobei die Innenseite der Seitenfläche dazu ausgestaltet ist, lokal einen Konkavspiegel (15) auszubilden, welcher dazu geeignet ist, die Reflexion von Lichtstrahlen, welche von dem Plasma (P) in Richtung der Aufnahmefaser (13, 113) emittiert werden, zu optimieren.

19. Vorrichtung nach Anspruch 18, **dadurch gekennzeichnet, dass** die Einheit zur Erzeugung des Plasmas außerdem Zusatzmittel (4, 104) zur Emission eines zweiten Anregungslaserstrahls (18, 118) und Einführung dieses Strahls aus einer Kammer (7, 107) in eine andere, über wenigstens eine zweite Anregungsöffnung (19, 119), welche in dem unteren Teil der seitlichen Fläche jeder Kammer auf Höhe einer Ausdehnung des Plasmas (P) oder eines Ausstoßes des abgebauten Materials des Biochips (1) ausgebildet ist, aufweist, wobei jede zweite Anregungsöffnung an einer Stelle ausgebildet ist, für welche vorgesehen ist, dass sie weder durch die Aufnahmefaser (13, 113) noch durch den Konkavspiegel (15) beeinflusst wird.

20. Vorrichtung nach Anspruch 19, wobei der Anspruch 18 gemäß dem Anspruch 15 ist, **dadurch gekennzeichnet, dass** die Zusatzmittel (4) zur Emission einen galvanometrischen Kopf (17) umfassen, welcher dazu geeignet ist, den zweiten Anregungsstrahl (18) von einer zweiten Anregungsöffnung (19) zu einer anderen zu verlagern, und dass jede zweite Anregungsöffnung (19) bevorzugt mit einer dritten optischen Linse versehen ist, welche dazu geeignet ist, den zweiten Anregungslaserstrahl (18) entsprechend der Ausdehnungs- oder Ausstoßhöhe zusammenlaufen zu lassen.

21. Vorrichtung nach Anspruch 19, wobei der Anspruch 18 gemäß dem Anspruch 17 ist, **dadurch gekennzeichnet, dass** jede Plasmakammer (107) ein Paar von zweiten Anregungsöffnungen (119) aufweist, welche einander gegenüber liegen, sodass diese Öffnungspaare innerhalb der Anordnung (106) von Kammern ausgerichtet sind für die Fokussierung, durch diese Ausrichtung, eines zweiten Anregungslaserstrahls (118), welcher durch die Zusatzmittel (104) zur Emission emittiert wird.

22. Vorrichtung nach einem der Ansprüche 13-21, **dadurch gekennzeichnet, dass** jeder Messpunkt (2) eine magnetische oder paramagnetische Kugel (41a, 41b, 41c) umfasst, beispielsweise aus Partikeln von Kobalt, Nickel oder ihrem Oxid enthaltendem Polystyrol, wobei jede Kugel eine andere Farbe als diejenige vom Rest des Biochips (1) und diejenige der anderen Messpunkte aufweist, sodass diese Kugeln Testfiguren ausbilden, welche dazu geeignet sind, auf eindeutige Weise durch ein Bilderfassungssystem, mit welchem die Spektroskopieeinheit (5) versehen ist, identifiziert zu werden, und dass bevorzugt der Biochip (1) eine Folie (40) aus einem Kunststoffmaterial umfasst, welche einen Magnetschirm bildet, beispielsweise aus Polymid, auf welchem so viele Löcher (42) wie Kugeln (41a, 41b, 41c) ausgebildet sind und welcher ein magnetisiertes Blatt (43) überragt, welches dazu geeignet ist, in diesen Löchern ein Magnetfeld mit einer Intensität zu erzeugen, welche zwischen 0,5 T und 5 T enthalten ist.

23. Vorrichtung nach Anspruch 22, **dadurch gekennzeichnet, dass** jede Kugel (41a, 41b) gebildet ist aus zwei Halbkugeln S1 und S2 oder S1' und S2' , welche in einem der Löcher (42) aneinander geklebt sind und von welchen nur die untere Halbkugel (S2 oder S2'), welche in Richtung des magnetischen Blatts (43) gewandt ist, paramagnetische Eigenschaften aufweist, wobei die Sonden (44) auf der konvexen Oberfläche der oberen Halbkugel (S1 oder S1'), welche gefärbt ist, um die Testfigur auszubilden, aufgebracht sind.

24. Vorrichtung nach Anspruch 22, **dadurch gekennzeichnet, dass** jede Kugel (41c) gebildet ist aus einer gefärbten oberen Halbkugel (S1"), welche dazu bestimmt ist, die Testfigur auszubilden und auf deren konvexer Oberfläche die Sonden (44) aufgebracht sind, wobei ein Konus (S2"), welcher paramagnetische Eigenschaften aufweist, über seine Basis an der Schnittfläche (T) dieser Halbkugel und auf der Seite des magnetischen Blatts (43) im Inneren der Löcher (42) angeklebt ist.

25. Vorrichtung nach einem der Ansprüche 18-24, **dadurch gekennzeichnet, dass** die seitliche Oberfläche jeder Plasmakammer (7, 107) zylindrisch oder in Richtung des Biochips (1) auseinanderlaufend konisch ist, mit einer Höhe, welche zwischen 2 mm und 10 mm enthalten ist, und in einem Abstand von dem Biochip mündend, welcher zwischen 5 $\mu$m und 200 $\mu$m enthalten ist, mit einem Durchmesser für die untere Öffnung, welcher zwischen 1 mm und 5 mm enthalten ist.

26. Vorrichtung nach einem der Ansprüche 18-25, **dadurch gekennzeichnet, dass** jede Plasmakammer (7, 107) außerdem mit einer Gasinjektionsöffnung (11) versehen ist, welche auf der seitlichen Oberfläche in unmittelbarer Nähe der Anregungsöffnung (9, 109) ausgebildet ist und welche eine Leitung (12) aufnimmt, die dazu bestimmt ist, ein Inertgas einzuführen, wie z.B. Argon oder Helium, das geeignet ist, die Kammer an Sauerstoff zu verarmen und das Plasma (P) bei seiner Ausbildung zu aktivieren.

27. Vorrichtung nach einem der Ansprüche 15-26, **dadurch gekennzeichnet, dass** die Anordnung (6) von Plasmakammern (7) und der Biochip (1) jeweils beweglich entlang orthogonaler X- und Y-Achsen angebracht sind, sodass jede Bewegung des Biochips entlang der Y-Achse der Anordnung K Bewegungen entlang der X-Achse bewirkt, wobei:

- K definiert ist durch das Verhältnis P/l des Abstands P zwischen den jeweiligen Anregungsfasern (10) von zwei benachbarten Kammern und der Breite 1 entlang der X-Achse der bei jedem Laserpuls abgetragenen Oberfläche, wobei dieses Verhältnis moduliert ist durch den Formfaktor der Ablation vor Verdampfung, und wobei
- der Abstand P zwischen diesen zwei Anregungsfasern definiert ist durch die Gleichung P = L/ (N-1) mit N>1, wobei L die Breite des Biochips und N die Anzahl von Anregungsfasern in der Anordnung ist, und
dass der Abstand P zwischen zwei benachbarten Anregungsfasern (10) bevorzugt ein Vielfaches der Schrittweite zwischen zwei Messpunkten (2) auf dem Biochip (1) ist.

28. Vorrichtung nach einem der Ansprüche 15-27, **dadurch gekennzeichnet, dass** der Einschluss (8, 108) mit wenigstens einem Solenoid versehen ist, das dazu ausgestaltet ist, darin ein Magnetfeld zu erzeugen, insbesondere auf solche Weise, dass die Lebensdauer des oder jedes Plasmas (P) vergrößert und/oder seine Gestalt kontrolliert wird.

29. Vorrichtung nach einem der Ansprüche 15-28, **dadurch gekennzeichnet, dass** sie mit Mitteln versehen ist, um ein elektrisches Feld zu erzeugen, welche beispielsweise gebildet sind durch ein elektrisch leitendes Material für die Lagerung des Biochips oder aber eine Elektrode, welche von dieser Lagerung des Biochips getragen wird, womit eine weitere Elektrode verknüpft ist, welche von dem Einschluss getragen ist, um eine Potenzialdifferenz zu erzeugen.

30. Vorrichtung nach einem der Ansprüche 15-29, **dadurch gekennzeichnet, dass** der Einschluss (8, 108) eine im Wesentlichen parallelepipedartige Geometrie aufweist, welche dazu ausgestaltet ist, wenigstens eine Reihe von mehreren Plasmakammern (7, 107) zu umgeben, und welche gebildet ist durch eine mechanische oder laserbasierte Strukturierungstechnik, ausgehend von einem Pulver oder einem Flüssigpolymer, wie z.B. Stereolithographie, Laminierung, Sintern oder Photolithographie.

**31.** Vorrichtung nach einem der Ansprüche 13-30, **dadurch gekennzeichnet, dass** die Spektroskopieeinheit (5) wenigstens einen Spektrographen vom Photomultiplikatortyp umfasst, und dass ein optischer Filter, welcher nur bei der gewünschten Wellenlänge transparent ist, zwischen jeder optischen Aufnahmefaser (13, 113) und dem Spektrographen angeordnet ist.

**32.** Vorrichtung nach Anspruch 15, **dadurch gekennzeichnet, dass** sie eine einzige Plasmakammer (7') umfasst, welche gebildet ist durch einen den Biochip (1) enthaltenden geschlossenen Einschluss, von welchem wenigstens die obere Seite (7a') aus Quarz oder einem beliebigen anderen Material realisiert ist, welches für die Anregungs- und Aufnahmewellenlängen transparent ist, wobei diese geschlossene Kammer mit Ventilen zur Befüllung V1 mit Plasmaerzeugungsgas, wie z.B. Argon oder Stickstoff, und zum Auslass von Luft (V2) ausgestattet ist.

Fig. 1

20ng    40ng    200 ng    |2µg    4µg

Echantillon OLIGOs

$y = 4934,74 \, x + 1711,79$

Fig. 2

Echantillon RHs

$y = 59961,35 \, x + 3469,25$

Rapport de dilution

Fig. 3

PNA

Fig. 4

ERN

Fig. 5

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

Fig. 16

Fig. 17

**Fig. 18**

**Fig. 19**

**Fig. 20**

**Fig. 21**

Fig. 23

Fig. 22

Fig. 24

Fig. 25

Fig. 26

Fig. 27

Fig. 28

Fig. 29

Fig. 30

**Fig. 31**

**Fig. 32**

**Fig. 33**

**Fig. 34**

Fig. 35

**Fig. 36**

**Fig. 37**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060105354 A
- US 6407811 B
- FR 200600428 W
- WO 0243855 A

**Littérature non-brevet citée dans la description**

- **DAVID F et al.** *Bioscience Bioelectron.,* 2005
- **LI C. M. et al.** *Front Biosci.,* 2005
- **MACANOVIC A. et al.** *Nucleic Acid Research,* 2004
- **INCHUL YANG et al.** *Analytical Biochemistry,* 2004, vol. 335, 150-161
- **HEINRICH F. ARLINGHAUS et al.** *Analytical Chemistry,* 1997, vol. 69 (18), 3747-3753
- DNA chips: a new tool for genetic analysis and diagnostics. **CUZIN M.** Transfusion clinique et biologique. ARNETTE-BLACKWELL, 03 Juin 2001, vol. 8, 291-296
- **AL-JEFFERY M O et al.** On the use of LIBS and LIFS for rapid detection of Rb traces in blood. *PROCEEDINGS OF SPIE - THE INTERNATIONAL SOCIETY FOR OPTICAL ENGINEERING 2002,* 2002, vol. 4613, 152-161